# EUROPEAN PATENT SPECIFICATION

(11) **EP 2 681 900 B1**
(45) Date of publication and mention of the grant of the patent: **21.03.2018**
(21) Application number: 12717928.1
(22) Date of filing: 28.02.2012
(51) Int. Cl.: H04L 29/08, G01S 11/02, G01S 5/02, G01S 5/14, H04B 5/00, H04W 4/20

(54) **RANGING WITH BODY MOTION CAPTURE**
ENTFERNUNGSMESSUNG MIT KÖRPERBEWEGUNGSERFASSUNG
MESURE DE DISTANCE AVEC CAPTURE DES MOUVEMENTS DU CORPS

(30) Priority: 28.02.2011 US 201161447470 P; 27.02.2012 US 201213406394
(43) Date of publication of application: 08.01.2014
(73) Proprietor: Qualcomm Incorporated, San Diego, CA 92121 (US)
(72) Inventor: TEAGUE, Edward Harrison, San Diego California 92121 (US); JULIAN, David Jonathan, San Diego California 92121 (US); MAJUMDAR, Somdeb, San Diego California 92121 (US); PRENTICE, Adrian, San Diego California 92121 (US); BURDO, Rinat, San Diego California 92121 (US)
(74) Representative: Wegner, Hans
(86) International application number: PCT/US2012/027014
(87) International publication number: WO 2012/134690

(56) References cited:
- WO-A1-2007/121488
- JP-A- 2006 279 649
- US-A1- 2007 249 288
- US-A1- 2007 259 690
- ZEMENE W MEKONNEN ET AL: "Constrained maximum likelihood positioning for UWB based human motion tracking", INDOOR POSITIONING AND INDOOR NAVIGATION (IPIN), 2010 INTERNATIONAL CONFERENCE ON, IEEE, PISCATAWAY, NJ, USA, 15 September 2010 (2010-09-15), pages 1-10, XP031810232, ISBN: 978-1-4244-5862-2

## Description

### Claim of Priority under 35 U.S.C. §119

The present Application for Patent claims benefit of U.S. Provisional Patent Application Serial No. 61/447,470, entitled, "Ranging with body motion capture", filed February 28, 2011 and assigned to the assignee hereof and hereby expressly incorporated by reference herein.

### BACKGROUND

### Field

Certain aspects of the present disclosure generally relate to signal processing and, more particularly, to methods of ranging for body motion capture.

### Background

Body tracking systems have been progressing on two different fronts. First, professional grade "motion capture" systems are available that can capture motion of an actor, athlete, player, etc. with high fidelity for use by movie and game studios, for example. These systems are typically high-cost, and thus not suitable for consumer grade applications.

Second, living room game controllers have progressed recently from being based on button presses, to being based on player movement. Since these are consumer products, the technology is much lower cost, and in general, much lower in performance as well. For example, in the NINTENDO® Wii system, low-cost inertial sensors can detect hand motion used to control the game play. Issues with the accuracy of this type of game control have driven the rise in camera-based motion capture using camera augmentation systems. For example, the SONY® Move system can use a camera to track a spherical feature on the handheld game controller; this input can be combined with inertial sensor data to detect motion. Furthermore, the MICROSOFT® Kinect system is capable of removing the controller entirely and can use a combination of traditional and depth detecting cameras to detect the body motion utilizing these cameras alone.

There are two primary classes of problems with the current technology. First, these systems suffer from performance issues that limit the types of motions that are detectable and limit the types of games and user interactions that are possible. For example, camera systems may only work on things that are in the field of view of the camera, and that are not blocked by objects or people. Second, the camera augmentation systems are constrained to being operated in an environment where a stationary camera can be mounted and installed - most commonly in the living room.

Therefore, technology advances are desired to enable improvements in consumer grade body tracking performance and to enable these systems to go wherever the user wants to go. Example applications include mobile gaming between one or more players, and sports performance tracking and training (outdoor or in the gym). Further, there are many more potential applications for mobile body tracking that may emerge if such tracking technology is available at consumer prices.

The paper *"*Constrained Maximum Likelihood Positioning for UWB Based Human Motion Tracking" by Z. W. Mekonnen et al., 2010 International Conference on Indoor Positioning and Indoor Navigation, 15 - 17 September 2010, Zürich, Switzerland, addresses the problem of human motion tracking with ultra-wideband radio nodes. A general maximum likelihood formulation of the positioning problem is provided based on range measurements which can handle synchronous and asynchronous agents. Geometrical constraints on the node topology, which are imposed by the human body, are also taken into account. There are two types of communicating nodes, reference nodes with known positions called anchors, and agent nodes with unknown positions. The anchor nodes share common reference timing, i.e. they are synchronized, while the set of agent nodes may be unsynchronized.

US 2007/0249288 A1 discloses operations which may be performed based on distance-related functions associated with two or more devices. For example, one or more distance-based functions may be used to control whether a device is allowed to request another device to perform one or more functions. Similarly, one or more distance-based functions may be used to control whether a device may perform one or more functions requested by another device. A distance-related function may take various form including, for example, a distance between devices, two or more distances between devices, a rate of change in a relative distance between devices, relative acceleration between devices, or some combination of two or more of the these distance-related functions.

US 2007/0259690 A1 discloses an association procedure for two or more devices which may be based on one or more determined distances. Similarly, presence management may be based on one or more determined distances. A distance-related function may take various form including, for example, a distance between devices, two or more distances between devices, a rate of change in a relative distance between devices, relative acceleration between devices, or some combination of two or more of the these distance-related functions.

WO 2007/121488 A1 discloses techniques relating to verifying a distance between devices. A distance between two devices may be verified by requiring one of the devices to take one or more actions that generate a result that is only possible if the device is at most a given distance from the other device. In some aspects verified ranging is accomplished through the use of a ranging signal and a responsive signal. In some aspects the ranging signal may comprise a random, pseudorandom, or deterministic sequence. A responding device may operate on a ranging signal in accordance with a known function to generate a responsive signal. A ranging device also may perform operations to determine the likelihood that a responding device properly operated on a ranging signal that the ranging device transmitted to the responding device.

### SUMMARY

The invention is defined in the independent claims. Certain aspects of the present disclosure provide an apparatus mountable on a body of a body area network (BAN). The apparatus generally includes a first circuit configured to perform ranging with another body-mounted apparatus using Ultra-Wideband (UWB) radio technology, wherein the ranging comprises communicating signals with the other apparatus, and the signals are in accordance with the UWB radio technology.

Certain aspects of the present disclosure provide a method for communication. The method generally includes performing, by an apparatus mountable on a body of a body area network (BAN), ranging with another body-mounted apparatus using Ultra-Wideband (UWB) radio technology, wherein the ranging comprises communicating signals with the other apparatus, the signals are in accordance with the UWB radio technology, transmitting information generated by the ranging to a stationary apparatus of the BAN, and generating information based on the ranging, wherein the information is used to track motion of the body.

Certain aspects of the present disclosure provide an apparatus mountable on a body of a body area network (BAN). The apparatus generally includes means for performing ranging with another body-mounted apparatus using Ultra-Wideband (UWB) radio technology, wherein the ranging comprises communicating signals with the other apparatus, and the signals are in accordance with the UWB radio technology, means for transmitting information generated by the ranging to a stationary apparatus of the BAN, and means for generating information based on the ranging, wherein the information is used to track motion of the body.

Certain aspects of the present disclosure provide a computer program product for communication executed by an apparatus mountable on a body of a body area network (BAN). The computer program product generally includes a computer-readable medium encoded with instructions executable to perform ranging with another body-mounted apparatus using Ultra-Wideband (UWB) radio technology, wherein the ranging comprises communicating signals with the other apparatus, and the signals are in accordance with the UWB radio technology.

Certain aspects of the present disclosure provide user device mountable on a body of a body area network (BAN). The user device generally includes a circuit configured to perform ranging with another body-mounted user device using Ultra-Wideband (UWB) radio technology, wherein the ranging comprises communicating signals with the other user device, and the signals are in accordance with the UWB radio technology, and an interface configured to display an indication based on the communicated signals.

Certain aspects of the present disclosure provide an apparatus for communication. The apparatus generally includes a receiver configured to receive ranging information generated by ranging performed among one or more pairs of apparatuses in a body area network (BAN) mounted on at least one body, and a first circuit configured to estimate motion of the at least one body based on the ranging information.

Certain aspects of the present disclosure provide a method for communication. The method generally includes receiving ranging information generated by ranging performed among one or more pairs of apparatuses in a body area network (BAN) mounted on at least one body, estimating motion of the at least one body based on the ranging information, modifying at least one drift component of one or more sensors associated with the at least one body based on the ranging information, receiving one or more signals from one or more sensors associated with at least one of the apparatuses mounted on a body of the BAN, and utilizing the one or more signals for estimating the motion of the body.

Certain aspects of the present disclosure provide an apparatus for communication. The apparatus generally includes means for receiving ranging information generated by ranging performed among one or more pairs of apparatuses in a body area network (BAN) mounted on at least one body, and means for estimating motion of the at least one body based on the ranging information.

Certain aspects of the present disclosure provide a computer program product for communication executed by an apparatus. The computer program product generally includes a computer-readable medium encoded with instructions executable to receive ranging information generated by ranging performed among one or more pairs of apparatuses in a body area network (BAN) mounted on at least one body, and estimate motion of the at least one body based on the ranging information.

Certain aspects of the present disclosure provide a user device. The user device generally includes a receiver configured to receive ranging information generated by ranging performed among one or more pairs of devices in a body area network (BAN) mounted on at least one body, a circuit configured to estimate motion of the at least one body based on the ranging information, and an interface configured to display an indication based on the ranging information.

Certain aspects of the present disclosure provide an apparatus mountable on a body. The apparatus generally includes a radio circuit configured for performing data communication in a body-area-network (BAN) associated with the body and for performing ranging with another apparatus in the BAN.

Certain aspects of the present disclosure provide an apparatus for communication. The apparatus generally includes a first circuit configured to asynchronously collect ranging information generated by ranging performed among a plurality of pairs of apparatuses in a body area network (BAN) associated with at least one body, and a second circuit configured to utilize the asynchronously collected ranging information to update a motion estimate of the at least one body.

Certain aspects of the present disclosure provide an apparatus for communication. The apparatus generally includes a first circuit configured to schedule ranging between pairs of apparatuses mounted on a same body or different bodies of a body area network (BAN) according to a scheduling priority of each of the pairs.

Certain aspects of the present disclosure provide an apparatus for communication. The apparatus generally includes a receiver configured to receive information about ranging between a pair of apparatuses mounted on a same body or different bodies, and a circuit configured to calibrate, using the information, one or more parameters associated with a model of a body used to track motion of the body.

Certain aspects of the present disclosure provide an apparatus for wireless communications integrated into a body area network (BAN). The apparatus generally includes a first circuit configured to communicate with at least one apparatus mounted on a body of the BAN to obtain information associated with the body, and a second circuit configured to utilize the information for estimating motion of the body.

Certain aspects of the present disclosure provide an apparatus for communication. The apparatus generally includes a first circuit configured to collect ranging information generated by ranging performed between one or more pairs of apparatuses in a body area network (BAN) associated with at least one body, and a second circuit configured to utilize the ranging information to determine whether a motion of the at least one body corresponds to a recognizable gesture.

### BRIEF DESCRIPTION OF THE DRAWINGS

So that the manner in which the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects.
FIG. 1 illustrates an example of mobile body motion capture with ranging within a body area network (BAN) in accordance with certain aspects of the present disclosure.
FIG. 2 illustrates various components that may be utilized in a wireless device of the BAN in accordance with certain aspects of the present disclosure.
FIG. 3 illustrates example operations that may be performed at a body-mounted node for ranging with another node in accordance with certain aspects of the present disclosure.
FIG. 3A illustrates example components capable of performing the operations illustrated in FIG. 3.
FIG. 4 illustrates example operations that may be performed at a fixed (stationary) node that utilizes information generated by ranging between one or more pairs of body-mounted nodes in accordance with certain aspects of the present disclosure.
FIG. 4A illustrates example components capable of performing the operations illustrated in FIG. 4.
FIG. 5 illustrates example operations that may be performed at a body-mounted node comprising a common radio for both ranging and data communications in accordance with certain aspects of the present disclosure.
FIG. 5A illustrates example components capable of performing the operations illustrated in FIG. 5.
FIG. 6 illustrates example operations that may be performed at a fixed node for handling asynchronous range measurements in accordance with certain aspects of the present disclosure.
FIG. 6A illustrates example components capable of performing the operations illustrated in FIG. 6.
FIG. 7 illustrates example operations that may be performed at a fixed node for range scheduling in accordance with certain aspects of the present disclosure.
FIG. 7A illustrates example components capable of performing the operations illustrated in FIG. 7.
FIG. 8 illustrates example operations that may be performed at a fixed node for calibration of parameters associated with BAN in accordance with certain aspects of the present disclosure.
FIG. 8A illustrates example components capable of performing the operations illustrated in FIG. 8.
FIG. 9 illustrates example operations that may be performed at a mobile device integrated into BAN in accordance with certain aspects of the present disclosure.
FIG. 9A illustrates example components capable of performing the operations illustrated in FIG. 9.
FIG. 10 illustrates example operations that may be performed at a fixed node for gesture recognition based on ranging information in accordance with certain aspects of the present disclosure.
FIG. 10A illustrates example components capable of performing the operations illustrated in FIG. 10.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein, one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

The word "exemplary" is used herein to mean "serving as an example, instance, or illustration." Any aspect described herein as "exemplary" is not necessarily to be construed as preferred or advantageous over other aspects.

Although particular aspects are described herein, many variations and permutations of these aspects fall within the scope of the disclosure. Although some benefits and advantages of the preferred aspects are mentioned, the scope of the disclosure is not intended to be limited to particular benefits, uses, or objectives. Rather, aspects of the disclosure are intended to be broadly applicable to different wireless technologies, system configurations, networks, and transmission protocols, some of which are illustrated by way of example in the figures and in the following description of the preferred aspects. The detailed description and drawings are merely illustrative of the disclosure rather than limiting, the scope of the disclosure being defined by the appended claims and equivalents thereof.

### AN EXAMPLE WIRELESS COMMUNICATION SYSTEM

The techniques described herein may be used for various broadband wireless communication systems, including communication systems that are based on an orthogonal multiplexing scheme and a single carrier transmission. Examples of such communication systems include Orthogonal Frequency Division Multiple Access (OFDMA) systems, Single-Carrier Frequency Division Multiple Access (SC-FDMA) systems, Code Division Multiple Access (CDMA), and so forth. An OFDMA system utilizes orthogonal frequency division multiplexing (OFDM), which is a modulation technique that partitions the overall system bandwidth into multiple orthogonal sub-carriers. These sub-carriers may also be called tones, bins, etc. With OFDM, each subcarrier may be independently modulated with data. An SC-FDMA system may utilize interleaved FDMA (IFDMA) to transmit on sub-carriers that are distributed across the system bandwidth, localized FDMA (LFDMA) to transmit on a block of adjacent sub-carriers, or enhanced FDMA (EFDMA) to transmit on multiple blocks of adjacent sub-carriers. In general, modulation symbols are created in the frequency domain with OFDM and in the time domain with SC-FDMA. A CDMA system may utilize spread-spectrum technology and a coding scheme where each transmitter (i.e., user) is assigned a code in order to allow multiple users to be multiplexed over the same physical channel.

The teachings herein may be incorporated into (e.g., implemented within or performed by) a variety of wired or wireless apparatuses (e.g., nodes). In some aspects, a node comprises a wireless node. Such wireless node may provide, for example, connectivity for or to a network (e.g., a wide area network such as the Internet or a cellular network) via a wired or wireless communication link. In some aspects, a wireless node implemented in accordance with the teachings herein may comprise an access point or an access terminal.

Certain aspects of the present disclosure may support methods implemented in body area networks (BANs). The BAN represents a concept for continuous body monitoring for motion capture, diagnostic purposes in medicine, and so on.

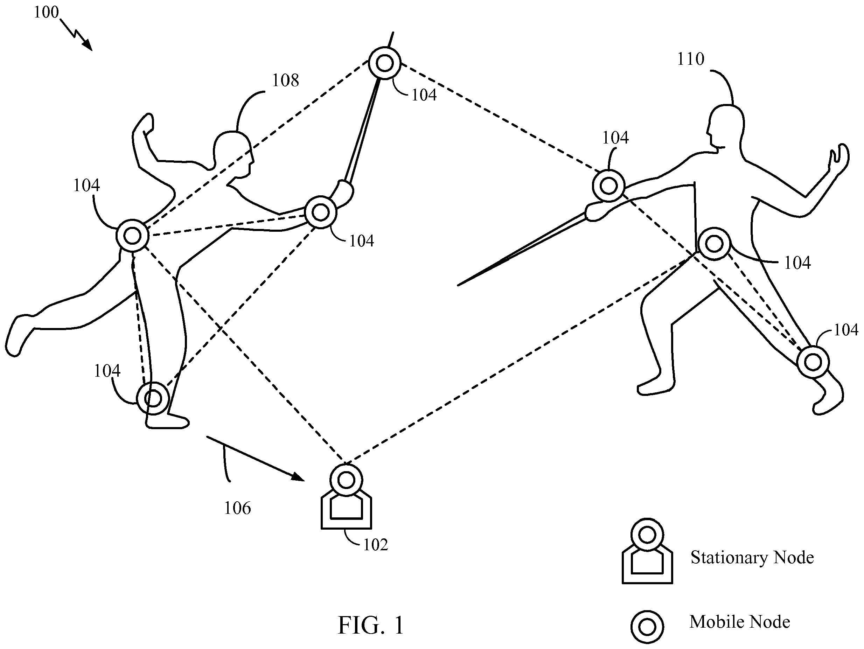

FIG. 1 illustrates an example 100 of a mobile game between two players, each of whom wears nodes. Each node may determine its distance (i.e., range) from other nodes located on the same player or on the other player. An optional stationary ground node 102 is also displayed in FIG. 1, which might not be mounted on a body but is instead placed at a stationary location. In an aspect of the present disclosure, body-mounted nodes 104 and the stationary node 102 may mutually communicate as being part of a BAN.

Each body-mounted node 104 may comprise a wireless sensor that senses (acquires) one or more signals associated with a body (e.g., an electrocardiogram (ECG) signal, an electroencephalogram (EEG) signal, a 3D-Accelerometer (3D-Accl) signal, etc) and communicates the signals (e.g., over a wireless channel or a communications link 106 illustrated in FIG. 1) to the stationary node (also referred to herein as an estimator) 102 for processing purposes. In an aspect of the present disclosure, a pair of body-mounted nodes may also communicate with each other for range sensing purposes. Range (distance) information generated by the body-mounted nodes 104 may be utilized at the stationary node 102 for estimating motion of the players from FIG. 1.

The BAN from FIG. 1 may be therefore viewed as a wireless communication system where various wireless nodes communicate using an orthogonal multiplexing scheme, a single carrier transmission, a pulse multiplexing scheme, or other communication method. The estimator 102 may be a monitoring device, a Personal Data Assistant (PDA), a mobile handset, a personal computer, etc. In an aspect, the wireless nodes in FIG. 1 may also operate in accordance with compressed sensing (CS), where an acquisition rate may be smaller than the Nyquist rate of a signal being acquired. For example, the body-mounted nodes from FIG. 1 may acquire the signals associated with the body in accordance with the CS.

As discussed further below, in some aspects, the communications link 106 comprises a pulse-based physical layer. For example, the physical layer may utilize ultra-wideband pulses that have a relatively short length (e.g., on the order of a few nanoseconds) and a relatively wide bandwidth. In some aspects, an ultra-wide band may be defined as having a fractional bandwidth on the order of approximately 20% or more and/or having a bandwidth on the order of approximately 500 MHz or more. The fractional bandwidth is a particular bandwidth associated with a device divided by its center frequency. For example, a device according to this disclosure may have a bandwidth of 1.75 GHz with center frequency 8.125 GHz and thus its fractional bandwidth is 1.75/8.125 or 21.5%.

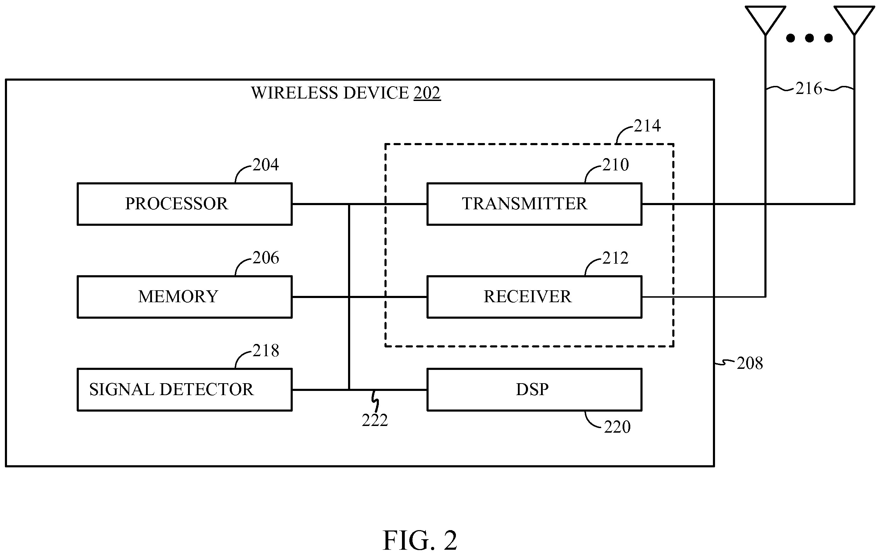

FIG. 2 illustrates various components that may be utilized in a wireless device (wireless node) 202 that may be employed within the system from FIG. 1. The wireless device 202 is an example of a device that may be configured to implement the various methods described herein. The wireless device 202 may correspond to the estimator 102 or to any of the body-mounted nodes 104 from FIG. 1.

The wireless device 202 may include a processor 204, which controls operation of the wireless device 202. The processor 204 may also be referred to as a central processing unit (CPU). Memory 206, which may include both read-only memory (ROM) and random access memory (RAM), provides instructions and data to the processor 204. A portion of the memory 206 may also include non-volatile random access memory (NVRAM). The processor 204 typically performs logical and arithmetic operations based on program instructions stored within the memory 206. The instructions in the memory 206 may be executable to implement the methods described herein.

The wireless device 202 may also include a housing 208 that may include a transmitter 210 and a receiver 212 to allow transmission and reception of data between the wireless device 202 and another wireless node (e.g., another wireless node in a remote location). The transmitter 210 and receiver 212 may be combined into a transceiver 214. Wireless device 202 may also include one or more antennas 216 electrically coupled to the transceiver 214. The wireless device 202 may also include (not shown) multiple transmitters, multiple receivers, and/or multiple transceivers.

The wireless device 202 may also include a signal detector 218 that may quantify the level of signals received by the transceiver 214. The signal detector 218 may quantify detection of such signals using total energy, energy per subcarrier per symbol, power spectral density, and/or other quantification metrics. The wireless device 202 may also include a digital signal processor (DSP) 220 for use in processing signals.

The various components of the wireless device 202 may be coupled by a bus system 222, which may include a power bus, a control signal bus, and a status signal bus in addition to a data bus.

### MOBILE BODY TRACKING

According to certain aspects, mobile body tracking system may employ inertial sensors mounted to a body associated with a BAN. These systems may have limited dynamic range and may be limited by estimator drifts that are common with inertial sensors. Also, acceptable body motion estimation may use a large number of sensor nodes (e.g., a minimum of 15), since each articulated part of the body may need a full orientation estimate. Further, existing systems may need the performance of industrial grade inertial sensors, increasing cost, etc.

For consumers, ease of use and cost are typically of interest. Therefore, it is desirable to develop new methods for reducing the number of nodes required for mobile body tracking while maintaining a desired accuracy.

It should be noted that while the term "body" is used herein, the description can also apply to capturing poses of machines such as robots. Also, the presented techniques may apply to capturing poses of props in an activity, such as swords/shields, skateboards, racquets/clubs/bats, etc.

### USAGE OF RANGING FOR MOTION CAPTURE

Ranging is a sensing method that determines the distance between two nodes. A body motion estimator may combine ranges with inertial sensor measurements to correct for errors and provide the ability to estimate drift components in the inertial sensors. According to certain aspects, a set of body-mounted nodes may emit transmissions that can be detected with one or more stationary ground reference nodes. The reference nodes may have known positions, and may be time synchronized with each other and with the body-mounted nodes to within a fraction of a nanosecond. However, this system may not be practical for a consumer-grade product due its complex setup requirements. Therefore, further innovation may be desired.

Certain aspects of the present disclosure support mechanisms that allow a system to overcome the limitations of previous approaches and enable products that have the characteristics required for consumer-grade products.

### Ranging mechanism

In one aspect of the present disclosure, one node may produce range information associated with another node based on a signal round-trip-time rather than a time-of-arrival. This may eliminate clock differences between the two nodes from the range estimate, and thus may remove the requirement to synchronize nodes, which may dramatically simplify the setup. Further, this method makes all nodes essentially the same with respect to synchronization, since there is no concept of "synchronized nodes" versus "unsynchronized nodes."

This method may determine ranges between any two nodes, including between different body-mounted nodes. A stationary node (e.g., the estimator 102 from FIG. 1) may combine these ranges with inertial sensor data (i.e., measurements obtained by inertial sensors that may be mounted to a body associated with a BAN) and with constraints provided by a kinematic body model to estimate a pose of and/or motion of the body to which the body-mounted nodes are also attached. Whereas the previous system performed ranging only from a body node to a fixed node, removing the time synchronization requirement enables ranging between any two nodes. These additional ranges may be very valuable in a motion tracking estimator due to the additional range data available, and also due to the direct sensing of body relative position. Ranges between nodes on different bodies may be also useful for determining relative position and pose between the bodies.

With the use of high-accuracy round trip time ranges and ranges between nodes both on and off the body, the number and quality of the inertial sensors may be reduced. Reducing the number of nodes may make usage much simpler, and reducing the required accuracy of the inertial sensors may reduce cost. Both of these improvements are desirable in producing a system suitable for consumer products.

Referring back to FIG. 1, two players 108, 110 may participate in a mobile game. Each player may wear nodes that may be capable for range sensing between nodes on the same player or on the other player. The stationary ground node 102 may be configured as an estimator for capturing motion of the players based at least in part on information generated by the ranging.

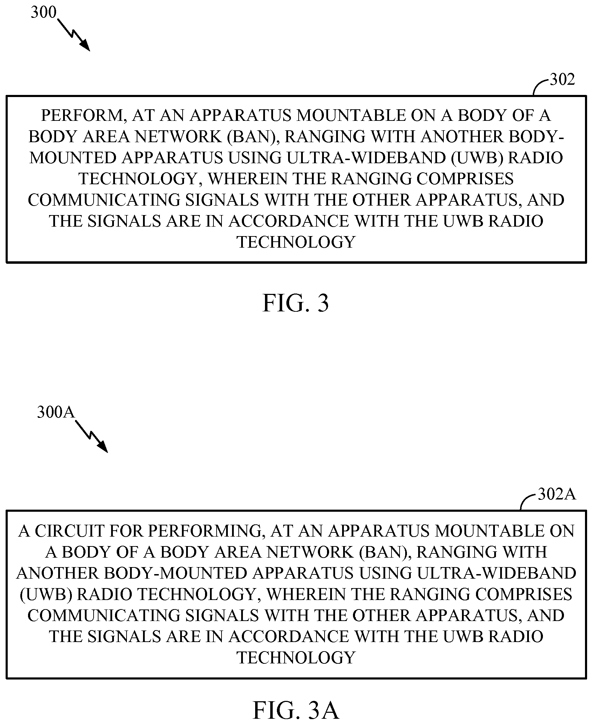

FIG. 3 illustrates example operations 300 that may be performed at a body-mounted node (e.g., at any of the body-mounted nodes 104 from FIG. 1) of a body area network (BAN) for ranging with another body-mounted node of the BAN in accordance with certain aspects of the present disclosure. At 302, the body-mounted node may perform ranging with the other body-mounted node using Ultra-Wideband (UWB) radio technology, wherein the ranging may comprise communicating signals with the other body-mounted node, and the signals may be in accordance with the UWB radio technology.

In one aspect, the node and the other node may be mounted on the same body of the BAN. In another aspect, the other node may be mounted on another body of the BAN. In general, the BAN may comprise a plurality of apparatuses (nodes) mounted on one or more bodies, and each of the nodes of the BAN may communicate with one or more other nodes of the BAN.

In an aspect of the present disclosure, the other body-mounted node may comprise a wearable personal computer (PC). Further, the body-mounted node may be configured to transmit information generated by the ranging to a stationary apparatus of the BAN. In one aspect, the information may be transmitted at a throughput of approximately 5.5 Mbps according to the UWB technology. Further, at least one pulse associated with at least one of the signals has at least one of a fractional bandwidth of at least about 20%, or a bandwidth of at least about 500MHz.

FIG. 3A illustrates example operations 300A that may be performed at a body-mounted node (e.g., at any of the body-mounted nodes 104 from FIG. 1) of a BAN for ranging with another body-mounted node of the BAN (e.g., node 104) in accordance with certain aspects of the present disclosure. At 302A, a first circuit (e.g., the processor 204) of the body-mounted node 104 may perform ranging with the other body-mounted node 104 using UWB radio technology, wherein the ranging may comprise communicating signals with the other apparatus, and the signals may be in accordance with the UWB radio technology. In an aspect, the processor 204 may perform the ranging with the other body-mounted node 104 based on a round-trip time of a signal exchanged between the node and the other node.

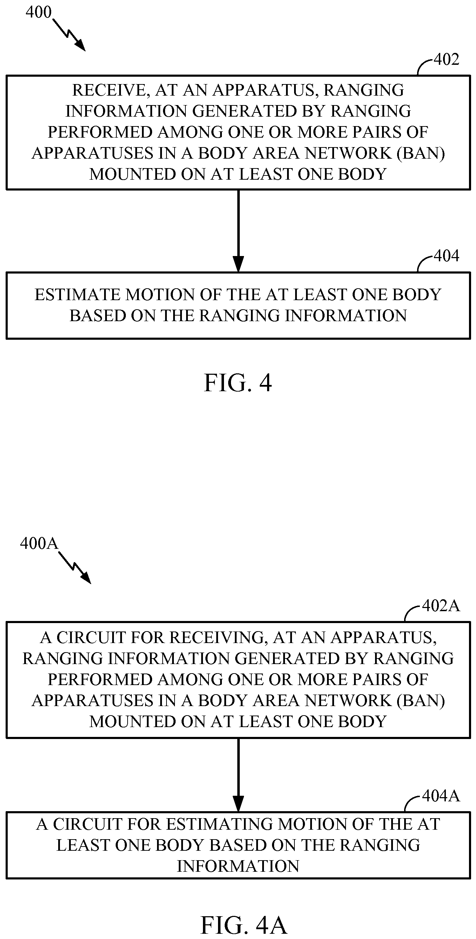

FIG. 4 illustrates example operations 400 that may be performed at a fixed (stationary) node (e.g., at the stationary node 102 from FIG. 1) that utilizes information generated by ranging between one or more pairs of body-mounted nodes in accordance with certain aspects of the present disclosure. At 402, the stationary node (i.e., an estimator) may receive ranging information generated by ranging performed among one or more pairs of nodes in a BAN mounted on at least one body. At 404, the estimator may estimate motion of the at least one body based on the ranging information.

In an aspect, the estimator may comprise a mobile device, wherein the mobile device may comprise a mobile phone. In one aspect of the present disclosure, the estimator may combine the information with at least one of data from one or more sensors associated with the at least one body or constraints of a model of the at least one body for estimating the motion of the at least one body. The estimator may utilize the information to correct for drift components of the sensors, wherein the one or more sensors may comprise at least one of: one or more inertial sensors, one or more magneto sensors, or one or more optical sensors, or combinations thereof.

FIG. 4A illustrates example operations 400A that may be performed at a fixed (stationary) node (e.g., at the stationary node 102 from FIG. 1) that utilizes information generated by ranging between one or more pairs of body-mounted nodes (e.g., any of the body-mounted nodes 104 from FIG. 1) in a BAN in accordance with certain aspects of the present disclosure. At 402A, a receiver (e.g., the receiver 212) of the stationary node 102 may receive ranging information generated by ranging performed among one or more pairs of nodes 104 mounted on at least one body of the BAN. At 404A, a first circuit (e.g., the processor 204) of the stationary node 102 may be configured to estimate motion of the at least one body based on the ranging information. In an aspect, the processor 204 may modify at least one drift component of one or more sensors associated with the at least one body based on the ranging information. Additionally, in some aspects, a second circuit (e.g., the processor 204) of the stationary node 102 may determine a relative position between two bodies of the BAN based on the estimated motion. Furthermore, a third circuit (e.g., the processor 204) of the stationary node 102 may determine a pose of the at least one body based on the estimated motion.

### Common radio for ranging and data communication

Any system with body-mounted nodes may need a communication network to carry control commands to the nodes, and measurements from the nodes. As aforementioned, this BAN may be a part of the system operation. In an aspect of the present disclosure, the same radio within the body-mounted node may be configured for both range sensing and data communications in the BAN. This integrated approach may reduce cost and complexity of the final product.

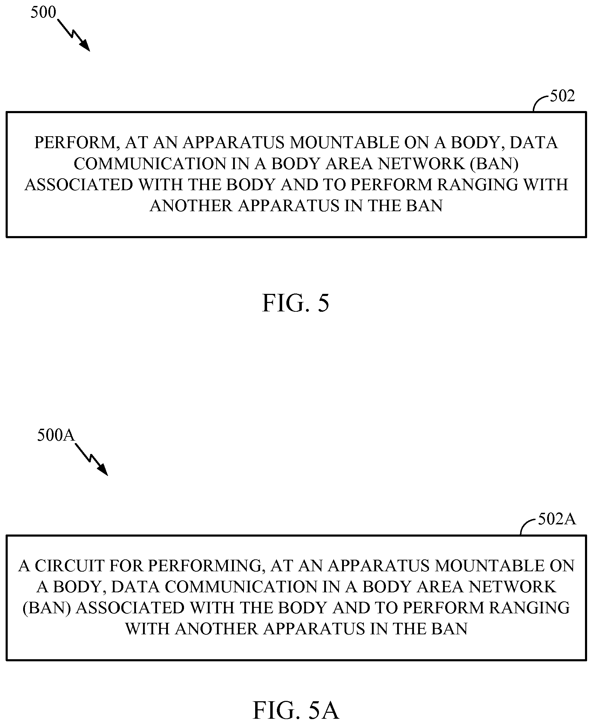

FIG. 5 illustrates example operations 500 that may be performed at a body-mounted node (e.g., at any of the body-mounted nodes 104 from FIG. 1) comprising a common radio for both ranging and data communications in accordance with certain aspects of the present disclosure. At 502, a radio circuit of the body-mounted node may be configured to perform data communication in a BAN associated with the body and to perform ranging with another node in the BAN.

In one aspect of the present disclosure, the radio circuit may be also configured to transmit information generated by the ranging. For example, the information may be transmitted at a throughput of approximately 5.5 Mbps according to the UWB technology. In an aspect, the BAN may comprise at least one of: one or more toy weapons, one or more skateboards, one or more racquets, or one or more baseball bats, or combinations thereof.

FIG. 5A illustrates example operations 500 that may be performed at a body-mounted node (e.g., at any of the body-mounted nodes 104 from FIG. 1) comprising a common radio for both ranging and data communications in accordance with certain aspects of the present disclosure. At 502A, a radio circuit (e.g., the transceiver 214) of the body-mounted node 104 may be configured to perform data communication in a BAN associated with the body and to perform ranging with another node in the BAN (e.g., with any of the body-mounted nodes 104). In an aspect, the transceiver 214 may transmit information generated by the ranging, e.g., at a throughput of approximately 5.5 Mbps. Additionally, in some aspects, a second circuit (e.g., the processor 204) of the body-mounted node 104 may generate information based on the ranging, wherein the information may be used to track motion of the body.

### Handling asynchronous range measurements

According to certain aspects, systems may attempt to create range measurements that are very close together in time so that the ranges can be simultaneously processed by the estimator. However, with the system setup described above, where ranges may be produced on a best-effort basis and without tight synchronization of measurement timestamps, the estimator may need to be capable of incorporating any range measurement at any time. An approach is proposed in the present disclosure that may enable the use of asynchronously collected range information in the body motion estimator. The estimator may perform this by weighting the estimate updates according to the body motion estimate prior to the update and the geometry of the range collected. Thus, while any one range may not be sufficient to solve for all estimated dimensions, ranges collected from different node pairs over time may provide sufficient observability of all dimensions.

While asynchronous ranges may be handled by the system, ranges with given timestamps could be accurate on a global system time basis. This may be needed so that the final body motion estimator can correctly incorporate the time-stamped measurements. The system proposed in the present disclosure may employ a control mechanism that enables each node to synchronize to the global system time. This may be achieved by sending data packets with time information embedded in the packet. It should be noted that the time accuracy requirements may be loose enough that they can be achieved simply by data transmissions, in contrast with the time accuracy needed for time-of-arrival (TOA) or time difference of arrival (TDOA) ranging. It should be also noted that the global time basis described in the present disclosure may have other uses as well, for example with scheduling range measurements, as described in the following detailed description.

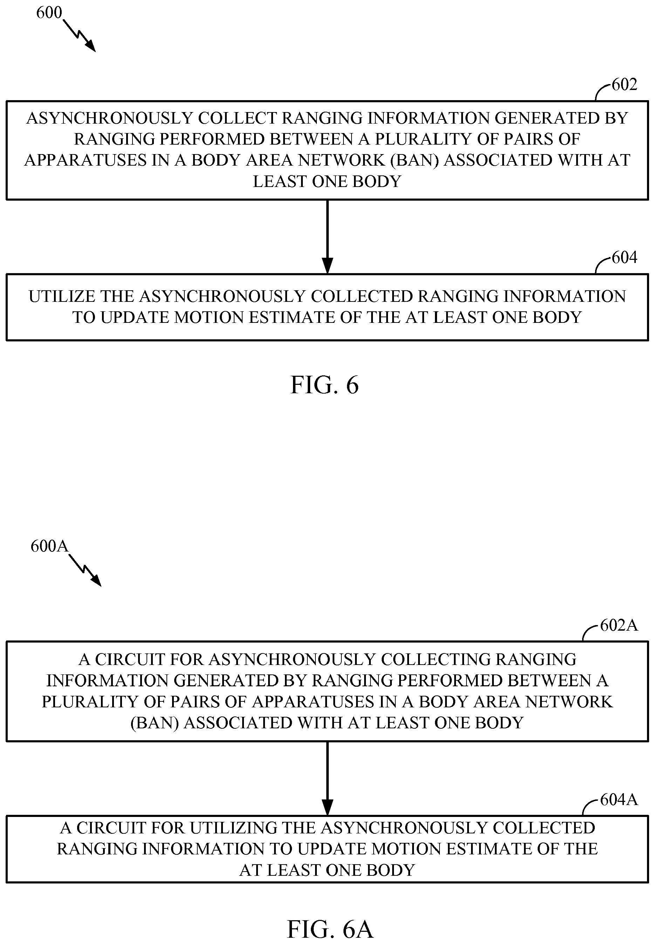

FIG. 6 illustrates example operations 600 that may be performed at a fixed node (e.g., at the stationary node 102 from FIG. 1) for handling asynchronous range measurements in accordance with certain aspects of the present disclosure. At 602, the fixed node may asynchronously collect ranging information generated by ranging performed among a plurality of pairs of devices in a BAN associated with at least one body. At 604, the fixed node may utilize the asynchronously collected ranging information to update a motion estimate of the at least one body.

FIG. 6A illustrates example operations 600A that may be performed at a fixed node (e.g., at the stationary node 102 from FIG. 1) for handling asynchronous range measurements in accordance with certain aspects of the present disclosure. At 602A, a first circuit (e.g., the signal detector 218) of the fixed node 102 may asynchronously collect ranging information generated by ranging performed among a plurality of pairs of devices (e.g., nodes 104) in a BAN associated with at least one body. At 604A, a second circuit (e.g., the processor 204) of the fixed node 102 may utilize the asynchronously collected ranging information to update a motion estimate of the at least one body. In an aspect, the processor 204 may be also configured to update the motion estimate according to the timestamp of that ranging information. Additionally, in some aspects, a transmitter of the fixed node 102 (e.g., the transmitter 210) may transmit, to the node 104, one or more packets with information related to a global system time embedded in each of the packets for synchronizing each of the nodes 104 to the global system time, and wherein each of the ranging information generated by ranging between each of the pairs of nodes 104 may comprise a timestamp related to the global system time. Further, each of the ranging information may comprise a timestamp indicating a time when that ranging information was generated. In an aspect, the signal detector 218 may asynchronously collect the ranging information based at least in part on the timestamp. Furthermore, a third circuit (e.g., the processor 204) of the fixed node 102 may weigh the updated motion estimate according to a motion estimate of the at least one body prior to the update and a geometry of the asynchronously collected ranging information.

### Range scheduling

As aforementioned, the proposed system may allow for ranging between any two nodes in the system. However, practical constraints may allow any one apparatus (node) to participate in ranging with only one other apparatus (node) at a time (this is just one example of a constraint on ranging, and other types may exist). Therefore, some scheduling of ranging attempts may be needed. Further, since the node pairs from which a range is available may change over time due to line-of-sight occlusion from body parts, some intelligence in selecting the ranges may be needed. According to certain aspects of the present disclosure, the system may maintain a prioritized list of node pairs based on various factors, such as at least one of: a time elapsed since last range, output error magnitude estimates, sensor error magnitude estimates, previous body pose, current pose and predicted future of body pose/motion, values of previous range measurements, a probability of occlusion, power consumption control or minimization, or values of inertial sensor measurements, such as using a detection of movement to trigger range measurement(s).

In an aspect of the present disclosure, information about the prioritized list of node pairs may be utilized to form control commands, which may be sent to the nodes in the system to help them determine when to perform ranging, and with which other node(s).

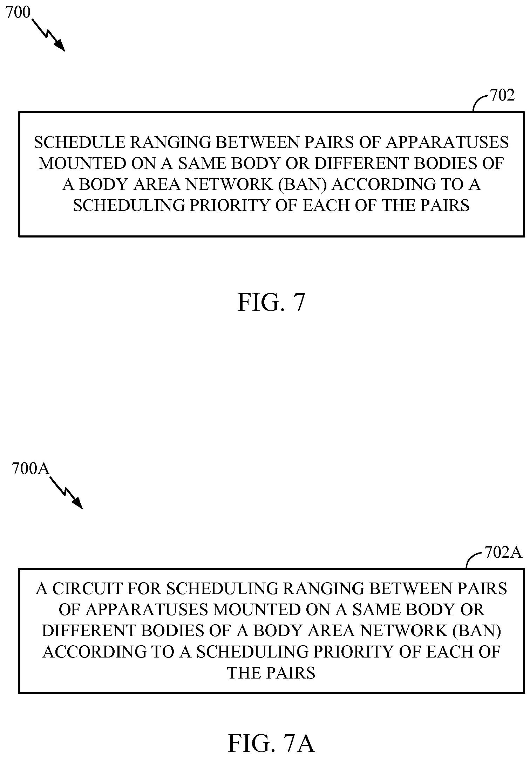

FIG. 7 illustrates example operations 700 that may be performed at a fixed node (e.g., at the stationary node 102 from FIG. 1) for range scheduling in accordance with certain aspects of the present disclosure. At 702, the fixed node may schedule ranging between pairs of nodes mounted on a same body or different bodies of a BAN according to a scheduling priority of each of the pairs. In an aspect of the present disclosure, the scheduling priority for a particular pair of apparatuses (i.e., for a pair of nodes) may be based on at least one of: a time elapsed since last ranging, an estimated output error magnitude associated with that pair, an estimated sensor error magnitude associated with that pair, a current pose of at least one body where the nodes are mounted, a previous pose of the at least one body, a predicted future pose of the at least one body, one or more values of previous range measurements for that pair, a probability of occlusion between nodes of that pair, power consumption associated with that pair of nodes, or one or more values of inertial sensor measurements associated with the BAN.

FIG. 7A illustrates example operations 700A that may be performed at a fixed node (e.g., at the stationary node 102 from FIG. 1) for range scheduling in accordance with certain aspects of the present disclosure. At 702A, a first circuit (e.g., the processor 204) of the fixed node 102 may schedule ranging between pairs of devices (e.g., nodes 104) mounted on a same body or different bodies of a BAN according to a scheduling priority of each of the pairs. In an aspect, the processor 204 may dynamically reschedule the ranging between the pairs of nodes 104 based on at least one of an estimated position of the body or an estimated relative position between the bodies. In another aspect, the processor 204 may reschedule the ranging based on estimated movement of one or more of the node 104. In yet another aspect, the processor 204 may modify a rate of the ranging between one or more of the pairs of nodes 104, if the one or more pairs of nodes 104 are utilized to estimate a specific state of the body. Additionally, in some aspects, a transmitter of the fixed node 102 (e.g., the transmitter 210) may transmit a control command to a particular pair of nodes 104 with information about the scheduling priority. Furthermore, a second circuit (e.g., the processor 204) of the fixed node 102 may initiate the ranging if one or more estimated measurement errors associated with the BAN equal to or exceed one or more thresholds.

### Methods for calibration

According to certain aspects of the present disclosure, calibration techniques may be needed for mobile body motion tracking, as well as for consumer products. Therefore, the simplicity (or "invisibility") of calibration requirements may be needed to maintain ease-of-use. The system proposed in the present disclosure may enable simple and precise calibration due to the availability of ranges between nodes. The types of parameters to be calibrated may comprise node position and orientation on the body, body parameters such as bone length, a height of human person, inertial sensor offsets and biases.

Some of these parameters may also be estimated during active motion tracking, making the determination of these parameters largely invisible to the user. For example, the position of a node on a user's arm may be considered being static. Then, during estimation of a body pose, the estimator may solve for the position that is most consistent with the measured data. This on-line calibration may be possible since the relative range measurements might not drift over time.

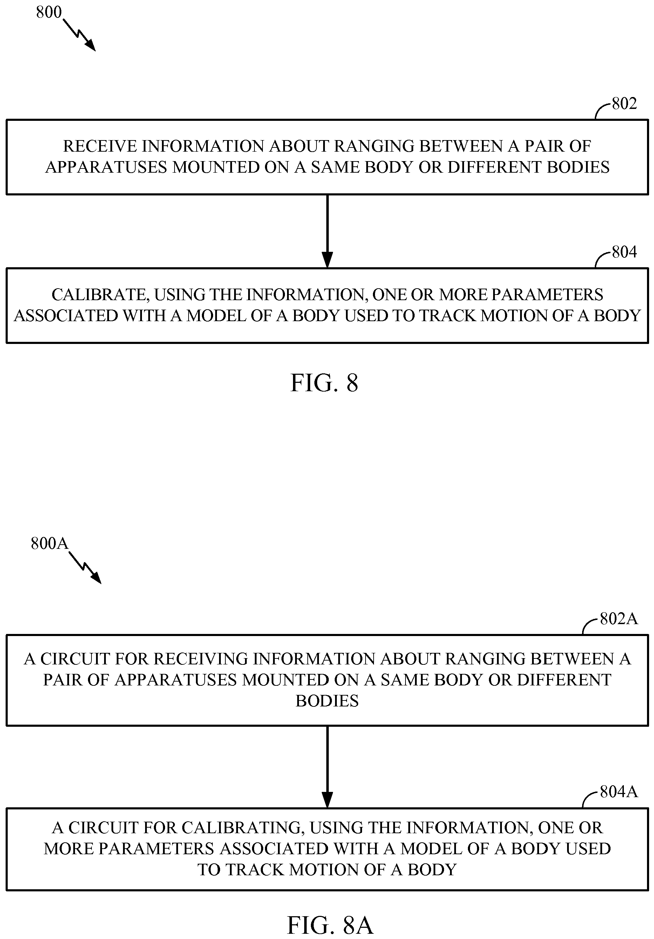

FIG. 8 illustrates example operations 800 that may be performed at a fixed node (e.g., at the stationary node 102 from FIG. 1) for calibration of parameters in accordance with certain aspects of the present disclosure. At 802, the fixed node may receive information about ranging between a pair of devices mounted on a same body or different bodies. At 804, the fixed node may calibrate, using the information, one or more parameters associated with a model of a body used to track motion of the body.

FIG. 8A illustrates example operations 800A that may be performed at a fixed node (e.g., at the stationary node 102 from FIG. 1) for calibration of parameters in accordance with certain aspects of the present disclosure. At 802A, a receiver of the fixed node 102 (e.g., the receiver 212) may receive information about ranging between a pair of devices (e.g., nodes 104) mounted on a same body or different bodies. At 804A, a circuit (e.g., the processor 204) of the fixed node 102 may calibrate, using the information, one or more parameters associated with a model of a body used to track motion of the body. In an aspect, the processor 204 may estimate at least one of the parameters during tracking motion of the body according to the model.

### Integration with mobile devices

Users of mobile body tracking are likely to have a mobile device as well. A mobile device (e.g., a smart-phone) may provide a gateway to game content, social networking of activity progress or outcomes, a high quality screen for feedback, and also a fairly high performance processor. The BAN system of the present disclosure may integrate with one or more mobile devices to take advantage of the capabilities listed above as well as incorporating input from the sensors directly on the mobile device. For example, most mobile devices may comprise at least one of one or more inertial sensors, a magnetometer, a proximity device, a microphone, or a camera, etc.

If the mobile device is in a static position during motion capture, it may provide a stationary node location for ranging. If it is on the body, it can be used as a body-mounted node. If the mobile device comprises a camera, it may be oriented toward the users, and may provide additional input to the body motion estimation algorithm by identifying body features and tracking their movements. If the mobile device is body-mounted, the camera may also be used to track features and contribute to the body motion estimation.

As aforementioned, the system proposed in the present disclosure may also utilize the computing capability of the processor on the mobile device for some of the most intensive data processing, such as the final fusion of all sensor information in the body pose estimator.

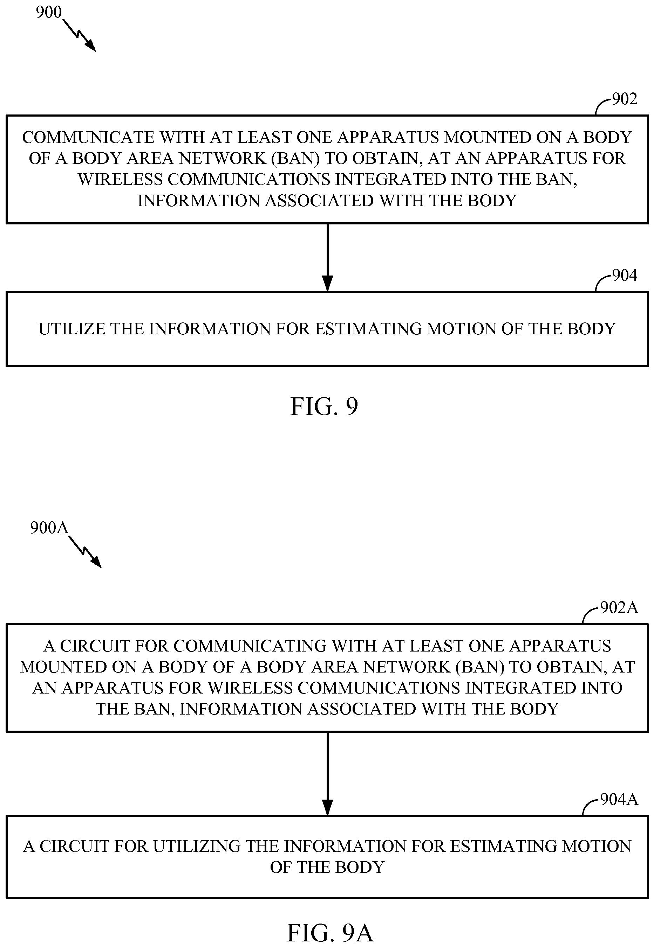

FIG. 9 illustrates example operations 900 that may be performed at a mobile device integrated into a BAN in accordance with certain aspects of the present disclosure. At 902, the mobile device may communicate with at least one apparatus mounted on a body of the BAN to obtain information associated with the body. At 904, the mobile device may utilize the information for estimating motion of the body.

According to certain aspects of the present disclosure, the mobile device may be mounted on a body (e.g., any of the body-mounted nodes 104 from FIG. 1 may represent the mobile device). In one aspect of the present disclosure, the mobile device may comprise a mobile phone. In another aspect, the mobile device may comprise a PlayStation Portable (PSP) smart-phone. In yet another aspect, the mobile device may comprise a Dual-Screen (DS) smart-phone.

FIG. 9A illustrates example operations 900A that may be performed at a mobile device (e.g., the estimator 102 or any of the body-mounted nodes 104 from FIG. 1) integrated into a BAN in accordance with certain aspects of the present disclosure. At 902, a first circuit (e.g., the transceiver 214) of the mobile device may communicate with at least one node 104 mounted on a body of the BAN to obtain information associated with the body. At 904A, a second circuit (e.g., the processor 204) of the mobile device may utilize the information for estimating motion of the body. Additionally, in some aspects, a receiver of the mobile device (e.g., the receiver 212) may receive one or more signals from one or more sensors associated with the at least one node 104, and the processor 204 may utilize the one or more signals for estimating the motion of the body. In an aspect, the transceiver 214 may provide a stationary location for ranging of the at least one node 104, if the mobile device is stationary during capturing the motion of the body. Furthermore, a third circuit (e.g., the processor 204) of the mobile device may perform final fusion of information obtained by sensors associated with the body for estimating a pose of the body.

### Ranging augmentation of gesture recognition

A related area to the system described above is associated with systems that use a pattern matching algorithm to determine whether or not a motion (gesture) that is categorized into one of a fixed number of predefined classes is present. This technology can be sometimes called gesture recognition. The gesture recognition systems may take sensor data as the input to the matching algorithm. These systems may often utilize machine learning algorithms to tune the matching algorithm (or "classifier") based on trials with many participants performing the motion classes.

The success of these systems may be dependent in part on the sensors available as input during the training and matching phases. The use of relative range information from nodes on and off the body may be valuable for many of the same reasons as the full motion capture examples above. For example, the relative range sensors may give drift-less motion information that is not available with inertial sensors alone. This may allow the gesture recognition system to be more precise in classification, and may also allow more classes to be defined that were previously non-differentiable with prior sensing methods.

Further, the system of the present disclosure may enable an alternate classification strategy, which takes as input the processed sensor data either in the form of a full motion estimate, or some partial processing such as orientation of a node. Since this input may be formed from multiple sensors with complimentary performance characteristics, the performance of the classifier may improve.

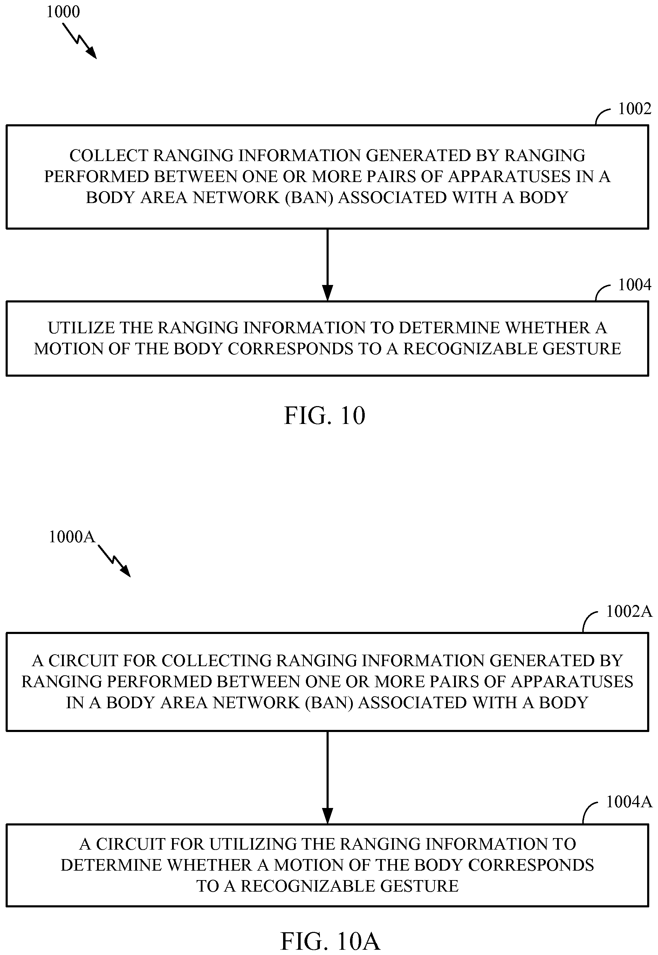

FIG. 10 illustrates example operations 1000 that may be performed at a fixed node (e.g., at the stationary node 102 from FIG. 1) for gesture recognition based on ranging information in accordance with certain aspects of the present disclosure. At 1002, the fixed node may collect ranging information generated by ranging performed between one or more pairs of apparatuses in a BAN associated with a body (e.g., between one or more pairs of body-mounted nodes). At 1004, the fixed node may utilize the ranging information to determine whether a motion of the body corresponds to a recognizable gesture. In an aspect, the recognizable gesture may belong to a predetermined set of gestures.

FIG. 10A illustrates example operations 1000A that may be performed at a fixed node (e.g., at the stationary node 102 from FIG. 1) for gesture recognition based on ranging information in accordance with certain aspects of the present disclosure. At 1002A, a first circuit (e.g., the transceiver 214) of the fixed node 102 may collect ranging information generated by ranging performed between one or more pairs of apparatuses (e.g., nodes 104) in a BAN associated with a body (e.g., between one or more pairs of body-mounted nodes 104). At 1004A, a second circuit (e.g., the processor 204) of the fixed node 102 may utilize the ranging information to determine whether a motion of the body corresponds to a recognizable gesture. In an aspect, the processor 204 may use a pattern matching algorithm to determine whether the motion corresponds to the recognizable gesture. In another aspect, the processor 204 may combine the ranging information and information obtained by one or more inertial sensors of the BAN to determine whether the motion corresponds to the recognizable gesture.

### OPTIMIZING POWER CONSUMPTION AND PERFORMANCE OF RANGING BASED MOTION CAPTURE SYSTEMS

Motion capture systems based on inertial or optical sensors may suffer from many well-documented problems. Examples may include drift errors in the measurements from the sensors, which produce accumulative errors in the position estimates, and loss of data due to occlusion of optical sensors. Augmenting motion capture using ranging may eliminate a number of these issues by providing a means to dead-reckon position. This approach may also allow a user-friendly way of recalibrating estimates from inertial or optical sensors.

Even with ranging based motion capture or estimation, some problems may remain, such as the fact that power consumption may need to be minimized to improve battery life of the nodes that perform ranging. Furthermore, occlusion may still happen due to nodes oriented such that the line-of-sight between them is reduced or eliminated.

The present disclosure proposes several ideas to optimize the power consumption and performance of a ranging based motion capture system. This system may benefit most from a mesh-networked array of nodes where any node can potentially range with any other node in the network. Methods of exploiting this network architecture in a collaborative framework are described, where the network as a whole may be self-aware in order to reduce power consumption and improve performance.

The general set-up of all the following ideas may assume a network of nodes with one or more motion sensors (inertial, optical, magnetic, etc) and also a central decision-making or scheduling node. Ranging may be possible between any pair of nodes. The scheduling node may have access to all range measurements.

### Adapting ranging based on activity

Certain aspects of the present disclosure support performing ranging between nodes when appropriate. In a typical motion capture scenario, the end-goal may be to be able to track the movement of various nodes that are part of the system. However, it may be probable that not all the nodes are in significant motion at the same time.

A method is proposed in the present disclosure to schedule ranging for a particular node based on determination of its motion. For example, it can be considered a node **N** with a non-ranging sensor **A** that consumes lower power than ranging at identical sampling rates. One example is that the sensor **A** can be in an 'on' state continuously and it may locally determine whether the node is in motion. Alternatively, the measurements from the sensor **A** may be analyzed by the scheduler to determine whether it is in motion. In an aspect, the motion may be defined as one or more components of the measurements from the sensor **A** having crossed a pre-defined set of thresholds.

Only when it is determined that the node **N** is in motion, the scheduler may start the ranging process for the node **N.** The scheduler may stop the ranging process for the node **N** once this node is categorized as stationary.

This can be generalized beyond simple categorization of stationary or mobile nodes. A mobile node may not have sufficient motion to warrant a ranging measurement. By scheduling ranging for nodes on-demand, the system is more power-efficient and may have higher battery life.

### Co-operative ranging based on model-based estimation

Certain aspects of the present disclosure support co-operative ranging in order to optimize power and performance. Motion capture may depend on estimating relative motion between one or more sets of body-mounted nodes being monitored. These estimates may be conditioned on a body model that determines the set of possible motion states of the body.

Therefore, it may be quite probable that based on a current state of the body, certain other states may be eliminated from being possible in the given window of time. Therefore, the nodes that exclusively determine the excluded set of body-states may not need to be located. In such situation, the scheduler may predict a subset of nodes it needs to get positions for based on the current state, and it may stop the ranging to nodes it doesn't need. This approach may save power consumption for the nodes that are not needed.

This same technique may be utilized to enhance estimation accuracy. If the scheduler determines that certain nodes are needed for estimating a particular state, then the scheduler may increase the rate of measurement for those nodes. This may help to get a better estimate of positions of the nodes that may be critical for determining the body-state.

### Adapting ranging based on drift or other errors

In an aspect of the present disclosure, the scheduler may also control ranging rates based on determination or estimation of a drift or other types of measurement errors. In certain scenarios, it may be sufficient to use non-ranging methods to determine body-states until the errors creep in. The scheduler may keep track of such errors and initiate ranging or increase a rate of the ranging when it determines that the errors have equaled to or exceeded one or more thresholds. On the other hand, the scheduler may reduce a rate of the ranging or terminate the ranging, if one or more estimated measurement errors associated with the BAN equal to or reduce below one or more other thresholds.

### Improving ranging measurements during occlusion

Even with ranging, it is highly possible that occlusion and non-line-of-sight conditions may occur. Two possible methods to resolve this issue are proposed in the present disclosure: prediction of occlusions using a body-model, and usage of surrogate measurements from other nodes.

For the first method, a body model may be used to predict when a node would go into occlusion. The scheduler may then take several actions. In an aspect of the present disclosure, the scheduler may pro-actively turn off ranging to the affected node to save power. In another aspect, it may update its estimation algorithm quicker to allow for the fact that measurements from the affected node shall not be available. In yet another aspect, the scheduler may turn on the ranging or increase a rate of the ranging for one or more other nodes that are not occluded according to the prediction to compensate for the occluded nodes.

For the second method, surrogate measurements from other nodes may be utilized. In a situation where a node **A** (a first apparatus) is occluded from a scheduler **S** (a second apparatus) but another node **B** (a third apparatus) may be positioned such that ranging between **A-B** and between **B-S** is still possible, the node **A** may be ranged by the node **B** producing the range value **R**_{AB}. Simultaneously, the node **B** may be ranged by the scheduler S producing the range value **R**_{BS}. The scheduler may then use the two range values **R**_{AB} and **R**_{BS} to estimate the value of **R**_{AS}. It should be noted that **R**_{AS} may not be directly measurable due to occlusion between the node **A** and the scheduler **S**.

The various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in Figures, those operations may have corresponding counterpart means-plus-function components with similar numbering. For example, operations 300, 400, 500, 600, 700, 800, 900 and 1000 illustrated in FIGS. 3, 4, 5, 6, 7, 8, 9 and 10 correspond to components 300A, 400A, 500A, 600A, 700A, 800A, 900A and 1000A illustrated in FIGS. 3A, 4A, 5A, 6A, 7A, 8A, 9A and 10A.

For example, the means for performing ranging may comprise an application specific integrated circuit, e.g., the processor 204 of the wireless device 202 from FIG. 2. The means for transmitting may comprise a transmitter, e.g., the transmitter 210 of the wireless device 202. The means for performing data communication and ranging may comprise a transceiver, e.g., the transceiver 214 of the wireless device 202. The means for receiving may comprise a receiver, e.g., the receiver 212 of the wireless device 202. The means for utilizing may comprise an application specific integrated circuit, e.g., the processor 204. The means for combining may comprise an application specific integrated circuit, e.g., the processor 204. The means for determining may comprise an application specific integrated circuit, e.g., the processor 204. The means for generating may comprise an application specific integrated circuit, e.g., the processor 204. The means for asynchronously collecting may comprise an application specific integrated circuit, e.g., the signal detector 218 of the wireless device 202. The means for scheduling may comprise an application specific integrated circuit, e.g., the processor 204. The means for dynamically rescheduling may comprise an application specific integrated circuit, e.g., the processor 204. The means for modifying may comprise an application specific integrated circuit, e.g., the processor 204. The means for predicting may comprise an application specific integrated circuit, e.g., the processor 204. The means for turning off may comprise an application specific integrated circuit, e.g., the processor 204. The means for calibrating may comprise an application specific integrated circuit, e.g., the processor 204. The means for estimating may comprise an application specific integrated circuit, e.g., the processor 204. The means for communicating may comprise a transceiver, e.g., the transceiver 214 of the wireless device 202. The means for using may comprise an application specific integrated circuit, e.g., the processor 204.

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

As used herein, a phrase referring to "at least one of" a list of items refers to any combination of those items, including single members. As an example, "at least one of: *a*, *b*, or *c*" is intended to cover: *a*, *b*, *c*, *a-b*, *a-c*, *b-c*, *and a-b-c*.

The various illustrative logical blocks, modules and circuits described in connection with the present disclosure may be implemented or performed with a general purpose processor, a digital signal processor (DSP), an application specific integrated circuit (ASIC), a field programmable gate array signal (FPGA) or other programmable logic device (PLD), discrete gate or transistor logic, discrete hardware components or any combination thereof designed to perform the functions described herein. A general purpose processor may be a microprocessor, but in the alternative, the processor may be any commercially available processor, controller, microcontroller or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the present disclosure may be embodied directly in hardware, in a software module executed by a processor, or in a combination of the two. A software module may reside in any form of storage medium that is known in the art. Some examples of storage media that may be used include random access memory (RAM), read only memory (ROM), flash memory, EPROM memory, EEPROM memory, registers, a hard disk, a removable disk, a CD-ROM and so forth. A software module may comprise a single instruction, or many instructions, and may be distributed over several different code segments, among different programs, and across multiple storage media. A storage medium may be coupled to a processor such that the processor can read information from, and write information to, the storage medium. In the alternative, the storage medium may be integral to the processor.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

The functions described may be implemented in hardware, software, firmware, or any combination thereof. If implemented in software, the functions may be stored or transmitted over as one or more instructions or code on a computer-readable medium. Computer-readable media include both computer storage media and communication media including any medium that facilitates transfer of a computer program from one place to another. A storage medium may be any available medium that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared (IR), radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk, and Blu-ray® disc where disks usually reproduce data magnetically, while discs reproduce data optically with lasers. Thus, in some aspects computer-readable media may comprise non-transitory computer-readable media (e.g., tangible media). In addition, for other aspects computer-readable media may comprise transitory computer-readable media (e.g., a signal). Combinations of the above should also be included within the scope of computer-readable media.

Thus, certain aspects may comprise a computer program product for performing the operations presented herein. For example, such a computer program product may comprise a computer readable medium having instructions stored (and/or encoded) thereon, the instructions being executable by one or more processors to perform the operations described herein. For certain aspects, the computer program product may include packaging material.

Software or instructions may also be transmitted over a transmission medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of transmission medium.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the methods and apparatus described above without departing from the scope of the claims.

A wireless device (a wireless node) in the present disclosure may include various components that perform functions based on signals that are transmitted by or received at the wireless device. A wireless device may also refer to a wearable wireless device. In some aspects the wearable wireless device may comprise a wireless headset or a wireless watch. For example, a wireless headset may include a transducer adapted to provide audio output based on data received via a receiver. A wireless watch may include a user interface adapted to provide an indication based on data received via a receiver. A wireless sensing device may include a sensor adapted to provide data to be transmitted via a transmitter.

A wireless device may communicate via one or more wireless communication links that are based on or otherwise support any suitable wireless communication technology. For example, in some aspects a wireless device may associate with a network. In some aspects the network may comprise a personal area network (e.g., supporting a wireless coverage area on the order of 30 meters) or a body area network (e.g., supporting a wireless coverage area on the order of 10 meters) implemented using ultra-wideband technology or some other suitable technology. In some aspects the network may comprise a local area network or a wide area network. A wireless device may support or otherwise use one or more of a variety of wireless communication technologies, protocols, or standards such as, for example, CDMA, TDMA, OFDM, OFDMA, WiMAX, and Wi-Fi. Similarly, a wireless device may support or otherwise use one or more of a variety of corresponding modulation or multiplexing schemes. A wireless device may thus include appropriate components (e.g., air interfaces) to establish and communicate via one or more wireless communication links using the above or other wireless communication technologies. For example, a device may comprise a wireless transceiver with associated transmitter and receiver components (e.g., transmitter 210 and receiver 212) that may include various components (e.g., signal generators and signal processors) that facilitate communication over a wireless medium.

The teachings herein may be incorporated into (e.g., implemented within or performed by) a variety of apparatuses (e.g., devices). For example, one or more aspects taught herein may be incorporated into a phone (e.g., a cellular phone), a personal data assistant ("PDA") or so-called smart-phone, an entertainment device (e.g., a portable media device, including music and video players), a headset (e.g., headphones, an earpiece, etc.), a microphone, a medical sensing device (e.g., a biometric sensor, a heart rate monitor, a pedometer, an EKG device, a smart bandage, etc.), a user I/O device (e.g., a watch, a remote control, a light switch, a keyboard, a mouse, etc.), an environment sensing device (e.g., a tire pressure monitor), a monitoring device that may receive data from the medical or environment sensing device (e.g., a desktop, a mobile computer, etc.), a point-of-care device, a hearing aid, a set-top box, or any other suitable device. The monitoring device may also have access to data from different sensing devices via connection with a network.

These devices may have different power and data requirements. In some aspects, the teachings herein may be adapted for use in low power applications (e.g., through the use of an impulse-based signaling scheme and low duty cycle modes) and may support a variety of data rates including relatively high data rates (e.g., through the use of high-bandwidth pulses).

In some aspects a wireless device may comprise an access device (e.g., an access point) for a communication system. Such an access device may provide, for example, connectivity to another network (e.g., a wide area network such as the Internet or a cellular network) via a wired or wireless communication link. Accordingly, the access device may enable another device (e.g., a wireless station) to access the other network or some other functionality. In addition, it should be appreciated that one or both of the devices may be portable or, in some cases, relatively non-portable. Also, it should be appreciated that a wireless device also may be capable of transmitting and/or receiving information in a non-wireless manner (e.g., via a wired connection) via an appropriate communication interface.

While the foregoing is directed to aspects of the present disclosure, other and further aspects of the disclosure may be devised without departing from the basic scope thereof, and the scope thereof is determined by the claims that follow.

### In the following, further examples are described to facilitate the understanding of the invention:

1. An apparatus mountable on a body of a body area network (BAN), comprising:
   a first circuit configured to perform ranging with another body-mounted apparatus using Ultra-Wideband (UWB) radio technology, wherein
   the ranging comprises communicating signals with the other apparatus, and
   the signals are in accordance with the UWB radio technology.
2. The apparatus of example 1, wherein at least one pulse associated with at least one of the signals has at least one of a fractional bandwidth of at least about 20%, or a bandwidth of at least about 500MHz.
3. The apparatus of example 1, wherein the first circuit is also configured to perform the ranging with the other apparatus based on a round-trip time of a signal exchanged between the apparatus and the other apparatus.
4. The apparatus of example 1, further comprising:
   a transmitter configured to transmit information generated by the ranging to a stationary apparatus of the BAN.
5. The apparatus of example 1, wherein the other apparatus is mounted on the body.
6. The apparatus of example 1, wherein the other apparatus is mounted on another body of the BAN.
7. The apparatus of example 1, further comprising:
   a radio circuit configured to perform data communication in the BAN and to perform ranging with the other apparatus in the BAN, wherein
   the radio circuit is also configured to transmit information generated by the ranging.
8. The apparatus of example 1, further comprising:
   a second circuit configured to generate information based on the ranging, wherein the information is used to track motion of the body.
9. A method for communication, comprising
   performing, by an apparatus mountable on a body of a body area network (BAN), ranging with another body-mounted apparatus using Ultra-Wideband (UWB) radio technology, wherein
   the ranging comprises communicating signals with the other apparatus, and
   the signals are in accordance with the UWB radio technology.
10. The method of example 9, wherein at least one pulse associated with at least one of the signals has at least one of a fractional bandwidth of at least about 20%, or a bandwidth of at least about 500MHz.
11. The method of example 9, wherein the ranging with the other apparatus is based on a round-trip time of a signal exchanged between the apparatus and the other apparatus.
12. The method of example 9, further comprising:
   transmitting information generated by the ranging to a stationary apparatus of the BAN.
13. The method of example 9, wherein the other apparatus is mounted on the body.
14. The method of example 9, wherein the other apparatus is mounted on another body of the BAN.
15. The method of example 9, further comprising:
   performing data communication in the BAN; and
   transmitting information generated by the ranging.
16. The method of example 9, further comprising:
   generating information based on the ranging, wherein the information is used to track motion of the body.
17. An apparatus mountable on a body of a body area network (BAN), comprising:
   means for performing ranging with another body-mounted apparatus using Ultra-Wideband (UWB) radio technology, wherein
   the ranging comprises communicating signals with the other apparatus, and
   the signals are in accordance with the UWB radio technology.
18. The apparatus of example 17, wherein at least one pulse associated with at least one of the signals has at least one of a fractional bandwidth of at least about 20%, or a bandwidth of at least about 500MHz.
19. The apparatus of example 17, further comprising:
   means for performing the ranging with the other apparatus based on a round-trip time of a signal exchanged between the apparatus and the other apparatus.
20. The apparatus of example 17, further comprising:
   means for transmitting information generated by the ranging to a stationary apparatus of the BAN.
21. The apparatus of example 17, wherein the other apparatus is mounted on the body.
22. The apparatus of example 17, wherein the other apparatus is mounted on another body of the BAN.
23. The apparatus of example 17, further comprising:
   means for performing data communication in the BAN and ranging with the other apparatus in the BAN; and
   means for transmitting information generated by the ranging.
24. The apparatus of example 17, further comprising:
   means for generating information based on the ranging, wherein the information is used to track motion of the body.
25. A computer program product for communication executed by an apparatus mountable on a body of a body area network (BAN), comprising a computer-readable medium encoded with instructions executable to:
   perform ranging with another body-mounted apparatus using Ultra-Wideband (UWB) radio technology, wherein
   the ranging comprises communicating signals with the other apparatus, and
   the signals are in accordance with the UWB radio technology.
26. The computer program product of example 25, wherein at least one pulse associated with at least one of the signals has at least one of a fractional bandwidth of at least about 20%, or a bandwidth of at least about 500MHz.
27. The computer program product of example 25, wherein the instructions are further executable to:
   perform the ranging with the other apparatus based on a round-trip time of a signal exchanged between the apparatus and the other apparatus.
28. The computer program product of example 25, wherein the instructions are further executable to:
   transmit information generated by the ranging to a stationary apparatus of the BAN.
29. The computer program product of example 25, wherein the other apparatus is mounted on the body.
30. The computer program product of example 25, wherein the other apparatus is mounted on another body of the BAN.
31. The computer program product of example 25, wherein the instructions are further executable to:
   perform data communication in the BAN and ranging with the other apparatus in the BAN; and
   transmit information generated by the ranging.
32. The computer program product of example 25, wherein the instructions are further executable to:
   generate information based on the ranging, wherein the information is used to track motion of the body.
33. A user device mountable on a body of a body area network (BAN), comprising:
   a circuit configured to perform ranging with another body-mounted user device using Ultra-Wideband (UWB) radio technology, wherein the ranging comprises communicating signals with the other user device, and the signals are in accordance with the UWB radio technology; and
   an interface configured to display an indication based on the communicated signals.
34. An apparatus for communication, comprising:
   a receiver configured to receive ranging information generated by ranging performed among one or more pairs of apparatuses in a body area network (BAN) mounted on at least one body; and
   a first circuit configured to estimate motion of the at least one body based on the ranging information.
35. The apparatus of example 34, wherein the estimation comprises:
   combining the ranging information with at least one of data from one or more sensors associated with the at least one body or constraints of a model of the at least one body.
36. The apparatus of example 34, wherein the first circuit is also configured to:
   modify at least one drift component of one or more sensors associated with the at least one body based on the ranging information.
37. The apparatus of example 34, further comprising:
   a second circuit configured to determine a relative position between two bodies of the BAN based on the estimated motion.
38. The apparatus of example 34, further comprising:
   a second circuit configured to asynchronously collect the ranging information generated by ranging performed among two or more of the pairs of apparatuses; and
   a third circuit configured to utilize the asynchronously collected ranging information to update motion estimate of the at least one body.
39. The apparatus of example 38, wherein each of the ranging information comprises a timestamp indicating a time when that ranging information was generated.
40. The apparatus of example 34, further comprising:
   a transmitter configured to transmit, to the apparatuses, one or more packets with information related to a global system time embedded in each of the one or more packets for synchronizing each of the apparatuses to the global system time, and wherein
   each of the ranging information generated by ranging between each of the pairs of apparatuses comprises a timestamp related to the global system time.
41. The apparatus of example 40, further comprising:
   a second circuit configured to asynchronously collect the ranging information based at least in part on the timestamp.
42. The apparatus of example 34, further comprising:
   a second circuit configured to schedule the ranging between the pairs of apparatuses according to a scheduling priority of each of the pairs.
43. The apparatus of example 42, wherein the scheduling priority for a particular pair of apparatuses is based on at least one of: a time elapsed since last ranging, an estimated output error magnitude associated with that pair, an estimated sensor error magnitude associated with that pair, a current pose of the at least one body, a previous pose of the at least one body, a predicted future pose of the at least one body, one or more values of previous range measurements for that pair, a probability of occlusion between apparatuses of that pair, power consumption associated with that pair of apparatuses, or one or more values of inertial sensor measurements associated with the BAN.
44. The apparatus of example 42, wherein the second circuit is also configured to:
   dynamically reschedule the ranging between the pairs of apparatuses based on at least one of an estimated position of the at least one body or an estimated relative position between bodies of the BAN.
45. The apparatus of example 34, further comprising:
   a second circuit configured to predict whether a subset of the apparatuses would go into occlusion based on a model of the at least one body; and
   a third circuit configured to turn off the ranging for the subset of the apparatuses according to the prediction.
46. The apparatus of example 34, further comprising:
   a second circuit configured to schedule a first ranging between the apparatus and a first of the apparatuses and to schedule a second ranging between the first apparatus and a second of the apparatuses, if there is an occlusion between the apparatus and the second apparatus; and
   a third circuit configured to determine a range between the apparatus and the second apparatus based on information generated by the first ranging and the second ranging.
47. The apparatus of example 34, further comprising:
   a second circuit configured to calibrate, using the ranging information, one or more parameters associated with a model of the at least one body used to track motion of the at least one body.
48. The apparatus of example 47, wherein the one or more parameters comprise at least one of a position of one of the apparatuses on the at least one body, an orientation of that apparatus on the at least one body, a height of a person using that apparatus, or a length of a bone of the person on which that apparatus is mounted.
49. The apparatus of example 34, further comprising:
   a second circuit configured to communicate with at least one of the apparatuses mounted on a body of the BAN to obtain information associated with the body; and
   a third circuit configured to utilize the information for estimating motion of the body.
50. The apparatus of example 49, wherein:
   the receiver is also configured to receive one or more signals from one or more sensors associated with the at least one apparatus; and
   the third circuit is also configured to utilize the one or more signals for estimating the motion of the body.
51. The apparatus of example 49, wherein the apparatus comprises at least one of one or more inertial sensors, a magnetometer, a proximity device, a microphone, or a camera utilized to obtain the information.
52. The apparatus of example 34, further comprising:
   a second circuit configured to utilize the ranging information to determine whether the motion of the at least one body corresponds to a recognizable gesture.
53. The apparatus of example 52, wherein the second circuit is also configured to use a pattern matching algorithm to determine whether the motion corresponds to the recognizable gesture.
54. The apparatus of example 52, wherein the second circuit is also configured to combine the ranging information and information obtained by one or more inertial sensors of the BAN to determine whether the motion corresponds to the recognizable gesture.
55. A method for communication, comprising:
   receiving ranging information generated by ranging performed among one or more pairs of apparatuses in a body area network (BAN) mounted on at least one body; and
   estimating motion of the at least one body based on the ranging information.
56. The method of example 55, wherein the estimation comprises:
   combining the ranging information with at least one of data from one or more sensors associated with the at least one body or constraints of a model of the at least one body.
57. The method of example 55, further comprising:
   modifying at least one drift component of one or more sensors associated with the at least one body based on the ranging information.
58. The method of example 55, further comprising:
   determining a relative position between two bodies of the BAN based on the estimated motion.
59. The method of example 55, further comprising:
   asynchronously collecting the ranging information generated by ranging performed among two or more of the pairs of apparatuses; and
   utilizing the asynchronously collected ranging information to update motion estimate of the at least one body.
60. The method of example 59, wherein each of the ranging information comprises a timestamp indicating a time when that ranging information was generated.
61. The method of example 55, further comprising:
   transmitting, to the apparatuses, one or more packets with information related to a global system time embedded in each of the one or more packets for synchronizing each of the apparatuses to the global system time, and wherein
   each of the ranging information generated by ranging between each of the pairs of apparatuses comprises a timestamp related to the global system time.
62. The method of example 61, further comprising:
   asynchronously collecting the ranging information based at least in part on the timestamp.
63. The method of example 55, further comprising:
   scheduling the ranging between the pairs of apparatuses according to a scheduling priority of each of the pairs.
64. The method of example 63, wherein the scheduling priority for a particular pair of apparatuses is based on at least one of: a time elapsed since last ranging, an estimated output error magnitude associated with that pair, an estimated sensor error magnitude associated with that pair, a current pose of the at least one body, a previous pose of the at least one body, a predicted future pose of the at least one body, one or more values of previous range measurements for that pair, a probability of occlusion between apparatuses of that pair, power consumption associated with that pair of apparatuses, or one or more values of inertial sensor measurements associated with the BAN.
65. The method of example 63, further comprising:
   dynamically rescheduling the ranging between the pairs of apparatuses based on at least one of an estimated position of the at least one body or an estimated relative position between bodies of the BAN.
66. The method of example 55, further comprising:
   predicting whether a subset of the apparatuses would go into occlusion based on a model of the at least one body; and
   turning off the ranging for the subset of the apparatuses according to the prediction.
67. The method of example 55, further comprising:
   scheduling, by an apparatus, a first ranging between the apparatus and a first of the apparatuses and a second ranging between the first apparatus and a second of the apparatuses, if there is an occlusion between the apparatus and the second apparatus; and
   determining a range between the apparatus and the second apparatus based on information generated by the first ranging and the second ranging.
68. The method of example 55, further comprising:
   calibrating, using the ranging information, one or more parameters associated with a model of the at least one body used to track motion of the at least one body.
69. The method of example 68, wherein the one or more parameters comprise at least one of a position of one of the apparatuses on the at least one body, an orientation of that apparatus on the at least one body, a height of a person using that apparatus, or a length of a bone of the person on which that apparatus is mounted.
70. The method of example 55, further comprising:
   communicating, by an apparatus, with at least one of the apparatuses mounted on a body of the BAN to obtain information associated with the body; and
   utilizing the information for estimating motion of the body.
71. The method of example 70, further comprising:
   receiving one or more signals from one or more sensors associated with the at least one apparatus; and
   utilizing the one or more signals for estimating the motion of the body.
72. The method of example 70, wherein the apparatus comprises at least one of one or more inertial sensors, a magnetometer, a proximity device, a microphone, or a camera utilized to obtain the information.
73. The method of example 55, further comprising:
   utilizing the ranging information to determine whether the motion of the at least one body corresponds to a recognizable gesture.
74. The method of example 73, further comprising:
   using a pattern matching algorithm to determine whether the motion corresponds to the recognizable gesture.
75. The method of example 73, further comprising:
   combining the ranging information and information obtained by one or more inertial sensors of the BAN to determine whether the motion corresponds to the recognizable gesture.
76. An apparatus for communication, comprising:
   means for receiving ranging information generated by ranging performed among one or more pairs of apparatuses in a body area network (BAN) mounted on at least one body; and
   means for estimating motion of the at least one body based on the ranging information.
77. The apparatus of example 76, further comprising:
   means for combining the ranging information with at least one of data from one or more sensors associated with the at least one body or constraints of a model of the at least one body.
78. The apparatus of example 76, further comprising:
   means for modifying at least one drift component of one or more sensors associated with the at least one body based on the ranging information.
79. The apparatus of example 76, further comprising:
   means for determining a relative position between two bodies of the BAN based on the estimated motion.
80. The apparatus of example 76, further comprising:
   means for asynchronously collecting the ranging information generated by ranging performed among two or more of the pairs of apparatuses; and
   means for utilizing the asynchronously collected ranging information to update motion estimate of the at least one body.
81. The apparatus of example 80, wherein each of the ranging information comprises a timestamp indicating a time when that ranging information was generated.
82. The apparatus of example 76, further comprising:
   means for transmitting, to the apparatuses, one or more packets with information related to a global system time embedded in each of the one or more packets for synchronizing each of the apparatuses to the global system time, and wherein
   each of the ranging information generated by ranging between each of the pairs of apparatuses comprises a timestamp related to the global system time.
83. The apparatus of example 82, further comprising:
   means for asynchronously collecting the ranging information based at least in part on the timestamp.
84. The apparatus of example 76, further comprising:
   means for scheduling the ranging between the pairs of apparatuses according to a scheduling priority of each of the pairs.
85. The apparatus of example 84, wherein the scheduling priority for a particular pair of apparatuses is based on at least one of: a time elapsed since last ranging, an estimated output error magnitude associated with that pair, an estimated sensor error magnitude associated with that pair, a current pose of the at least one body, a previous pose of the at least one body, a predicted future pose of the at least one body, one or more values of previous range measurements for that pair, a probability of occlusion between apparatuses of that pair, power consumption associated with that pair of apparatuses, or one or more values of inertial sensor measurements associated with the BAN.
86. The apparatus of example 84, further comprising:
   means for dynamically rescheduling the ranging between the pairs of apparatuses based on at least one of an estimated position of the at least one body or an estimated relative position between bodies of the BAN.
87. The apparatus of example 76, further comprising:
   means for predicting whether a subset of the apparatuses would go into occlusion based on a model of the at least one body; and
   means for turning off the ranging for the subset of the apparatuses according to the prediction.
88. The apparatus of example 76, further comprising:
   means for scheduling a first ranging between the apparatus and a first of the apparatuses and to schedule a second ranging between the first apparatus and a second of the apparatuses, if there is an occlusion between the apparatus and the second apparatus; and
   means for determining a range between the apparatus and the second apparatus based on information generated by the first ranging and the second ranging.
89. The apparatus of example 76, further comprising:
   means for calibrating, using the ranging information, one or more parameters associated with a model of the at least one body used to track motion of the at least one body.
90. The apparatus of example 89, wherein the one or more parameters comprise at least one of a position of one of the apparatuses on the at least one body, an orientation of that apparatus on the at least one body, a height of a person using that apparatus, or a length of a bone of the person on which that apparatus is mounted.
91. The apparatus of example 76, further comprising:
   means for communicating with at least one of the apparatuses mounted on a body of the BAN to obtain information associated with the body; and
   means for utilizing the information for estimating motion of the body.
92. The apparatus of example 91, wherein:
   the means for receiving is further configured to receive one or more signals from one or more sensors associated with the at least one apparatus, and the apparatus further comprising
   means for utilizing the one or more signals for estimating the motion of the body.
93. The apparatus of example 91, wherein the apparatus comprises at least one of one or more inertial sensors, a magnetometer, a proximity device, a microphone, or a camera utilized to obtain the information.
94. The apparatus of example 76, further comprising:
   means for utilizing the ranging information to determine whether the motion of the at least one body corresponds to a recognizable gesture.
95. The apparatus of example 94, further comprising:
   means for using a pattern matching algorithm to determine whether the motion corresponds to the recognizable gesture.
96. The apparatus of example 94, further comprising:
   means for combining the ranging information and information obtained by one or more inertial sensors of the BAN to determine whether the motion corresponds to the recognizable gesture.
97. A computer program product for communication executed by an apparatus, comprising a computer-readable medium encoded with instructions executable to:
   receive ranging information generated by ranging performed among one or more pairs of apparatuses in a body area network (BAN) mounted on at least one body; and
   estimate motion of the at least one body based on the ranging information.
98. The computer program product of example 97, wherein the instructions are further executable to:
   combine the ranging information with at least one of data from one or more sensors associated with the at least one body or constraints of a model of the at least one body.
99. The computer program product of example 97, wherein the instructions are further executable to:
   modify at least one drift component of one or more sensors associated with the at least one body based on the ranging information.
100. The computer program product of example 97, wherein the instructions are further executable to:
   determine a relative position between two bodies of the BAN based on the estimated motion.
101. The computer program product of example 97, wherein the instructions are further executable to:
   asynchronously collect the ranging information generated by ranging performed among two or more of the pairs of apparatuses; and
   utilize the asynchronously collected ranging information to update motion estimate of the at least one body.
102. The computer program product of example 101, wherein each of the ranging information comprises a timestamp indicating a time when that ranging information was generated.
103. The computer program product of example 97, wherein the instructions are further executable to:
   transmit, to the apparatuses, one or more packets with information related to a global system time embedded in each of the one or more packets for synchronizing each of the apparatuses to the global system time, and wherein
   each of the ranging information generated by ranging between each of the pairs of apparatuses comprises a timestamp related to the global system time.
104. The computer program product of example 103, wherein the instructions are further executable to:
   asynchronously collect the ranging information based at least in part on the timestamp.
105. The computer program product of example 97, wherein the instructions are further executable to:
   schedule the ranging between the pairs of apparatuses according to a scheduling priority of each of the pairs.
106. The computer program product of example 105, wherein the scheduling priority for a particular pair of apparatuses is based on at least one of: a time elapsed since last ranging, an estimated output error magnitude associated with that pair, an estimated sensor error magnitude associated with that pair, a current pose of the at least one body, a previous pose of the at least one body, a predicted future pose of the at least one body, one or more values of previous range measurements for that pair, a probability of occlusion between apparatuses of that pair, power consumption associated with that pair of apparatuses, or one or more values of inertial sensor measurements associated with the BAN.
107. The computer program product of example 105, wherein the instructions are further executable to:
   dynamically reschedule the ranging between the pairs of apparatuses based on at least one of an estimated position of the at least one body or an estimated relative position between bodies of the BAN.
108. The computer program product of example 97, wherein the instructions are further executable to:
   predict whether a subset of the apparatuses would go into occlusion based on a model of the at least one body; and
   turn off the ranging for the subset of the apparatuses according to the prediction.
109. The computer program product of example 97, wherein the instructions are further executable to:
   schedule a first ranging between the apparatus and a first of the apparatuses and to schedule a second ranging between the first apparatus and a second of the apparatuses, if there is an occlusion between the apparatus and the second apparatus; and
   determine a range between the apparatus and the second apparatus based on information generated by the first ranging and the second ranging.
110. The computer program product of example 97, wherein the instructions are further executable to:
   calibrate, using the ranging information, one or more parameters associated with a model of the at least one body used to track motion of the at least one body.
111. The computer program product of example 110, wherein the one or more parameters comprise at least one of a position of one of the apparatuses on the at least one body, an orientation of that apparatus on the at least one body, a height of a person using that apparatus, or a length of a bone of the person on which that apparatus is mounted.
112. The computer program product of example 97, wherein the instructions are further executable to:
   communicate with at least one of the apparatuses mounted on a body of the BAN to obtain information associated with the body; and
   utilize the information for estimating motion of the body.
113. The computer program product of example 112, wherein the instructions are further executable to:
   receive one or more signals from one or more sensors associated with the at least one apparatus; and
   utilize the one or more signals for estimating the motion of the body.
114. The computer program product of example 112, wherein the apparatus comprises at least one of one or more inertial sensors, a magnetometer, a proximity device, a microphone, or a camera utilized to obtain the information.
115. The computer program product of example 97, wherein the instructions are further executable to:
   utilize the ranging information to determine whether the motion of the at least one body corresponds to a recognizable gesture.
116. The computer program product of example 115, wherein the instructions are further executable to:
   use a pattern matching algorithm to determine whether the motion corresponds to the recognizable gesture.
117. The computer program product of example 115, wherein the instructions are further executable to:
   combine the ranging information and information obtained by one or more inertial sensors of the BAN to determine whether the motion corresponds to the recognizable gesture.
118. A user device, comprising:
   a receiver configured to receive ranging information generated by ranging performed among one or more pairs of devices in a body area network (BAN) mounted on at least one body;
   a circuit configured to estimate motion of the at least one body based on the ranging information; and
   an interface configured to display an indication based on the ranging information.

## Claims

1. A method (300) for communication, performed at an apparatus (104) mounted on a body associated with a body area network, BAN, comprising:
determining whether the apparatus is in motion; and
performing (302) ranging with another body-mounted apparatus in the BAN, if it is determined that the apparatus is in motion;
wherein the ranging comprises communicating signals with the other apparatus and the signals are in accordance with Ultra-Wideband, UWB, radio technology.

2. The method of claim 1, wherein at least one pulse associated with at least one of the signals has at least one of a fractional bandwidth of at least about 20%, or a bandwidth of at least about 500MHz.

3. The method of claim 1, wherein the ranging with the other apparatus is based on a round-trip time of a signal exchanged between the apparatus and the other apparatus.

4. The method of claim 1, further comprising:
transmitting information generated by the ranging to a stationary apparatus of the BAN.

5. An apparatus (104, 300A) mountable on a body associated with a body area network, BAN, comprising:
means for determining whether the apparatus is in motion; and
means (302A) for performing ranging with another body-mounted apparatus in the BAN, if it is determined that the apparatus is in motion;
wherein the ranging comprises communicating signals with the other apparatus and the signals are in accordance with Ultra-Wideband, UWB, radio technology.

6. The apparatus of claim 5, wherein at least one pulse associated with at least one of the signals has at least one of a fractional bandwidth of at least about 20%, or a bandwidth of at least about 500MHz.

7. The apparatus of claim 5, further comprising:
means for performing the ranging with the other apparatus based on a round-trip time of a signal exchanged between the apparatus and the other apparatus.

8. The apparatus of claim 5, further comprising:
means for transmitting information generated by the ranging to a stationary apparatus of the BAN.

9. A method (400) for communication, performed at a stationary apparatus (102), comprising:
determining whether an apparatus mounted on at least one body associated with a body area network, BAN, is in motion;
starting a ranging process using Ultra-Wideband, UWB, radio technology between the apparatus and another body-mounted apparatus of the BAN as a pair, if it is determined that the apparatus is in motion;
receiving (402) ranging information generated by ranging performed by the pair of apparatuses; and
estimating (404) motion of the at least one body based on the ranging information.

10. The method of claim 9, wherein the estimation comprises:
combining the ranging information with at least one of data from one or more sensors associated with the at least one body or constraints of a model of the at least one body.

11. The method of claim 9, further comprising:
modifying at least one drift component of one or more sensors associated with the at least one body based on the ranging information.

12. A stationary apparatus (102, 400A) for communication, comprising:
means for determining whether an apparatus mounted on at least one body associated with a body area network, BAN, is in motion;
means for starting a ranging process using Ultra-Wideband, UWB, radio technology between the apparatus and another body-mounted apparatus of the BAN as a pair, if it is determined that the apparatus is in motion;
means (402A) for receiving ranging information generated by ranging performed by the pair of apparatuses; and
means (404A) for estimating motion of the at least one body based on the ranging information.

13. The apparatus of claim 12, further comprising:
means for combining the ranging information with at least one of data from one or more sensors associated with the at least one body or constraints of a model of the at least one body.

14. The apparatus of claim 12, further comprising:
means for modifying at least one drift component of one or more sensors associated with the at least one body based on the ranging information.

15. A computer program product for communication executed by an apparatus, comprising a computer-readable medium encoded with instructions executable to:
carry out a method according to any of claims 1 to 4 and 9 to 11.

## Patentansprüche

1. Ein Verfahren (300) für Kommunikation, das an einer Vorrichtung (104) durchgeführt wird, die auf einem Körper angebracht ist, der mit einem Körperbereichsnetzwerk, BAN, assoziiert ist, das Verfahren aufweisend:
Feststellen, ob die Vorrichtung in Bewegung ist; und
Durchführen (302) einer Entfernungsmessung mit einer anderen am Körper angebrachten Vorrichtung im BAN, wenn es festgestellt wird, dass die Vorrichtung in Bewegung ist;
wobei die Entfernungsmessung das Kommunizieren von Signalen mit der anderen Vorrichtung umfasst, und die Signale der Ultrabreitband-Frequenzbereich-, UWB-, Funktechnologie entsprechen.

2. Das Verfahren gemäß Anspruch 1, wobei zumindest ein Impuls, der mit zumindest einem Signal assoziiert ist, eine partielle Bandbreite von mindestens 20% und/oder eine Bandbreite von mindestens 500 MHz aufweist.

3. Das Verfahren gemäß Anspruch 1, wobei die Entfernungsmessung mit der anderen Vorrichtung auf einer Rundfahrtzeit eines Signals basiert, das zwischen der Vorrichtung und der anderen Vorrichtung gesendet wird.

4. Das Verfahren gemäß Anspruch 1, ferner aufweisend:
Senden von Information, die durch Entfernungsmessung mit einer stationären Vorrichtung des BANs erzeugt wird.

5. Eine Vorrichtung (104, 300A), die auf einem Körper angebracht werden kann, der mit einem Körperbereichsnetzwerk, BAN, assoziiert ist, aufweisend:
Mittel zum Feststellen, ob die Vorrichtung in Bewegung ist; und
Mittel (302A) zum Durchführen einer Entfernungsmessung mit einer anderen am Körper angebrachten Vorrichtung im BAN, wenn es festgestellt wird, dass die Vorrichtung in Bewegung ist;
wobei die Entfernungsmessung das Kommunizieren von Signalen mit der anderen Vorrichtung umfasst, und die Signale der Ultrabreitband-Frequenzbereich-, UWB-, Funktechnologie entsprechen.

6. Die Vorrichtung gemäß Anspruch 5, wobei zumindest ein Impuls, der mit zumindest einem Signal assoziiert ist, eine partielle Bandbreite von mindestens 20% und/oder eine Bandbreite von mindestens 500 MHz aufweist.

7. Die Vorrichtung gemäß Anspruch 5, ferner aufweisend:
Mittel zum Durchführen von Entfernungsmessung mit der anderen Vorrichtung auf einer Rundfahrtzeit eines Signals basiert, das zwischen der Vorrichtung und der anderen Vorrichtung gesendet wird.

8. Die Vorrichtung gemäß Anspruch 5, ferner aufweisend:
Mittel zum Senden von Information, die durch Entfernungsmessung mit einer stationären Vorrichtung des BANs erzeugt wird.

9. Ein Verfahren (400) zum Kommunizieren, das an einer stationären Vorrichtung (102) durchgeführt wird, das Verfahren aufweisend:
Feststellen, ob eine Vorrichtung, die auf zumindest einem Körper angebracht ist, der mit einem Körperbereichsnetzwerk, BAN, assoziiert ist, in Bewegung ist;
Beginnen einer Entfernungsmessung mittels Ultrabreitband-Frequenzbereiches-Funktechnologie zwischen der Vorrichtung und einer anderen auf einem Körper angebrachten Vorrichtung des BANs als ein Paar, wenn es festgestellt wird, dass die Vorrichtung in Bewegung ist;
Empfangen (402) von Entfernungsmessungsinformation, die durch Entfernungsmessung erzeugt wird, die von dem Vorrichtungspaar durchgeführt wird; und
Abschätzen (404) von Bewegung des zumindest eines Körpers basierend auf der Entfernungsmessungsinformation.

10. Das Verfahren gemäß Anspruch 9, wobei die Abschätzung umfasst:
Kombinieren der Entfernungsmessungsinformation mit Daten von einem oder mehreren Sensoren, die mit zumindest einem Körper assoziiert sind, und/oder Einschränkungen eines Modells der zumindest eines Körpers.

11. Das Verfahren gemäß Anspruch 9, ferner aufweisend:
Abändern von zumindest einer Driftkomponente eines oder mehreren Sensoren, die mit zumindest einem Körper assoziiert sind, basierend auf der Entfernungsmessungsinformation.

12. Eine stationäre Vorrichtung (102, 400A) für Kommunikation, aufweisend:
Mittel zum Feststellen, ob eine Vorrichtung, die auf zumindest einem Körper angebracht ist, der mit einem Körperbereichsnetzwerk, BAN, assoziiert ist, in Bewegung ist;
Mittel zum Beginnen einer Entfernungsmessung mittels Ultrabreitband-Frequenzbereiches-Funktechnologie zwischen der Vorrichtung und einer anderen auf einem Körper angebrachten Vorrichtung des BANs als ein Paar, wenn es festgestellt wird, dass die Vorrichtung in Bewegung ist;
Mittel (402A) zum Empfangen von Entfernungsmessungsinformation, die durch Entfernungsmessung erzeugt wird, die von dem Vorrichtungspaar durchgeführt wird; und
Mittel (404A) zum Abschätzen von Bewegung des zumindest eines Körpers basierend auf der Entfernungsmessungsinformation.

13. Die Vorrichtung gemäß Anspruch 12, ferner aufweisend:
Mittel zum Kombinieren der Entfernungsmessungsinformation mit Daten von einem oder mehreren Sensoren, die mit zumindest einem Körper assoziiert sind, und/oder Einschränkungen eines Modells der zumindest eines Körpers.

14. Die Vorrichtung gemäß 12, ferner aufweisend:
Mittel zum Abändern von zumindest einer Driftkomponente eines oder mehreren Sensoren, die mit zumindest einem Körper assoziiert sind, basierend auf der Entfernungsmessungsinformation.

15. Ein Computerprogrammprodukt für Kommunikation, die von einer Vorrichtung ausgeführt wird, aufweisend einen computerlesbaren Datenträger, der gespeicherte Anweisungen aufweist, die ausführbar sind zum Durchführen eines Verfahrens gemäß einem der Ansprüche 1 bis 4 und 9 bis 11.

## Revendications

1. Procédé (300) de communication, mis en oeuvre au niveau d'un appareil (104) monté sur un corps associé à un réseau d'étendue corporelle, BAN, comprenant :
la détermination si l'appareil est en mouvement ; et
la réalisation (302) d'une mesure de distance avec un autre appareil monté sur le corps dans le BAN, s'il est déterminé que l'appareil est en mouvement ;
dans lequel la mesure de distance comprend la communication de signaux avec l'autre appareil et les signaux sont conformes à la technologie radio ultra large bande, ULB.

2. Procédé selon la revendication 1, dans lequel au moins une impulsion associée à au moins un des signaux présente au moins l'une d'entre une largeur de bande fractionnaire d'au moins environ 20 % ou une largeur de bande d'au moins environ 500 MHz.

3. Procédé selon la revendication 1, dans lequel la mesure de distance avec l'autre appareil est basée sur un temps aller-retour d'un signal échangé entre l'appareil et l'autre appareil.

4. Procédé selon la revendication 1, comprenant en outre : la transmission d'informations, générées par la mesure de distance, à un appareil fixe du réseau BAN.

5. Appareil (104, 300A) montable sur un corps associé à un réseau d'étendue corporelle, BAN, comprenant :
un moyen pour déterminer si l'appareil est en mouvement ; et
un moyen (302A) pour réaliser une mesure de distance avec un autre appareil monté sur le corps dans le BAN, s'il est déterminé que l'appareil est en mouvement ;
dans lequel la mesure de distance comprend la communication de signaux avec l'autre appareil et les signaux sont conformes à une technologie radio ultra large bande, ULB.

6. Appareil selon la revendication 5, dans lequel au moins une impulsion associée à au moins un des signaux présente au moins l'une d'entre une largeur de bande fractionnaire d'au moins environ 20 % ou une largeur de bande d'au moins environ 500 MHz.

7. Appareil selon la revendication 5, comprenant en outre :
un moyen pour réaliser la mesure de distance avec l'autre appareil sur la base d'un temps aller-retour d'un signal échangé entre l'appareil et l'autre appareil.

8. Appareil selon la revendication 5, comprenant en outre :
un moyen pour transmettre des informations, générées par la mesure de distance, à un appareil fixe du BAN.

9. Procédé (400) de communication, réalisé au niveau d'un appareil fixe (102), comprenant :
la détermination si un appareil monté sur au moins un corps associé à un réseau d'étendue corporelle, BAN, est en mouvement ;
le démarrage d'un processus de mesure de distance à l'aide d'une technologie radio ultra large bande, ULB, entre l'appareil et un autre appareil monté sur le corps du BAN en tant que paire, s'il est déterminé que l'appareil est en mouvement ;
la réception (402) d'informations de mesure de distance générées par une mesure de distance réalisée par la paire d'appareils ; et
l'estimation (404) d'un mouvement de l'au moins corps sur la base des informations de mesure de distance.

10. Procédé selon la revendication 9, dans lequel l'estimation comprend :
la combinaison des informations de mesure de distance avec au moins une de données en provenance d'un ou de plusieurs capteurs associés à l'au moins un corps ou de contraintes d'un modèle de l'au moins un corps.

11. Procédé selon la revendication 9, comprenant en outre :
la modification d'au moins une composante de dérive d'un ou de plusieurs capteurs associés à l'au moins un corps sur la base des informations de mesure de distance.

12. Appareil stationnaire (102, 400A) de communication, comprenant :
un moyen pour déterminer si un appareil monté au moins sur un corps associé à un réseau d'étendue corporelle, BAN, est en mouvement ;
un moyen pour démarrer un processus de mesure de distance à l'aide d'une technologie radio ultra large bande, ULB, entre l'appareil et un autre appareil monté sur le corps du BAN en tant que paire, s'il est déterminé que l'appareil est en mouvement ;
un moyen (402A) pour recevoir des informations de mesure de distance générées par la mesure de distance réalisée par la paire d'appareils ; et
un moyen (404A) pour estimer un mouvement de l'au moins un corps sur la base des informations de mesure de distance.

13. Appareil selon la revendication 12, comprenant en outre :
un moyen pour combiner les informations de mesure de distance avec au moins une de données en provenance d'un ou de plusieurs capteurs associés à l'au moins un corps ou de contrainte d'un modèle de l'au moins un corps.

14. Appareil selon la revendication 12, comprenant en outre :
un moyen pour modifier au moins une composante de dérive d'un ou de plusieurs capteurs associés à l'au moins un corps sur la base des informations de mesure de distance.

15. Produit de programme d'ordinateur destiné à une communication exécutée par un appareil, comprenant un support lisible par ordinateur codé avec des instructions exécutables pour :
mettre en oeuvre un procédé selon l'une des revendications 1 à 4 et 9 à 11.
